# EUROPÄISCHE PATENTSCHRIFT

(11) **EP 2 730 407 B1**
(45) Veröffentlichungstag und Bekanntmachung des Hinweises auf die Patenterteilung: **14.09.2016**
(21) Anmeldenummer: 13178683.2
(22) Anmeldetag: 31.07.2013
(51) Int. Cl.: B32B 37/20, G06K 19/10

(54) **Verfahren und Vorrichtung zur Herstellung eines mehrlagigen Sicherheitsproduktes**
Method and device for manufacturing a multi-layer safety product
Procédé et dispositif destinés à la fabrication d'un produit de sécurité multicouches

(30) Priorität: 13.11.2012 DE 102012220706; 22.05.2013 EP 13168770
(43) Veröffentlichungstag der Anmeldung: 14.05.2014
(73) Patentinhaber: Bundesdruckerei GmbH, 10969 Berlin (DE)
(72) Erfinder: Leopold, André, 10119 Berlin (DE); Märtens, Detlef, 13599 Berlin (DE); Gahlbeck, Jeffry, 12437 Berlin (DE); Schütt, Thomas, 16567 Mühlenbeck (DE)
(74) Vertreter: Ramrath, Lukas

(56) Entgegenhaltungen:
- EP-A2- 0 420 261
- EP-A2- 2 441 583
- DE-A1-102009 048 805
- DE-U1- 20 122 264

## Beschreibung

Die Erfindung betrifft ein Verfahren und eine Vorrichtung zur Herstellung eines mehrlagigen Sicherheitsproduktes, insbesondere eines Sicherheitsdokuments.

Die DE 10 2009 007 552 A1 beschreibt ein Verfahren zur Herstellung von mehrlagigen Sicherheitsprodukten, bestehend aus zumindest einer Karte und zumindest einer auf zumindest einer Seite der Karte aufgebrachten Polymerfolie, welche als Rollenware bereitgestellt wird und mit zumindest einem Sicherheitsmerkmal versehen ist. Hierbei werden eine Rollenbahn der Polymerfolie und zumindest ein Streifen mit einer n-fachen Anzahl an Nutzen einer Kaschierstation zugeführt und kaschiert. Weiter wird vor dem Kaschieren eine Steuerlinie auf der Polymerfolie abgefragt, die dem zumindest einen auf dem jeweiligen Nutzen aufzubringenden Sicherheitsmerkmal zugeordnet ist oder eine dem Nutzen oder dem Streifen zugeordnete Referenzmarke abgefragt oder die Steuerlinie und die Referenzmarke abgefragt. Weiter werden eine Zuführgeschwindigkeit oder eine Zuführrichtung oder beides von der Rollenbahn der Polymerfolie und dem Streifen zur exakten Ausrichtung zueinander angepasst.

Die DE 10 2010 033 049 A1 offenbart ein Verfahren zur Herstellung eines Laminatverbundes für ein Sicherheits- und/oder Wertdokument, enthaltend zumindest eine erste Polymerschicht, eine zweite Polymerschicht und ein zwischen die erste Polymerschicht und die zweite Polymerschicht einzulaminierendes Sicherheitsmerkmal mit den folgenden Verfahrensstufen:
a) zumindest eine Seite des Sicherheitsmerkmales oder die dem Sicherheitsmerkmal zugewandte Seite der ersten Polymerschicht wird mit einem Klebstoff beschichtet, welcher reaktiv ist,
b) die erste Polymerschicht und das Sicherheitsmerkmal werden zueinander positioniert und miteinander kontaktiert,
c) der Klebstoff wird vernetzt und
d) die erste und die zweite Polymerschicht werden unter Einschluss des Sicherheitsmerkmales unter Einwirkung von Druck sowie Erwärmung miteinander laminiert.

Mehrlagige Sicherheitsdokumente können Personalisierungsdaten und/oder Individualisierungsdaten enthalten, z.B. in Form eines Lichtbildes, einer Seriennummer, einer Dokumentennummer oder eines Hologramms. Diese Daten können z.B. in Form einer personalisierten und/oder individualisierten Laminationslage, z.B. einer personalisierten Polymerfolie, bereitgestellt werden. Hierbei bezeichnet eine personalisierte und/oder individualisierte Laminationslage eine Lage, die Personalisierungsdaten und/oder Individualisierungsdaten enthält.

Die EP 2 441 583 A3 offenbart ein Druckträgerverbundmaterial zur Verwendung als Schicht in einem Kartenkörper, insbesondere einer Mehrfarbendruckkarte, wobei es
- eine Druckträgerschicht aus einem bevorzugt transparenten ersten Kunststoffmaterial,
- eine Designdruckschicht auf einer Oberfläche der Druckträgerschicht, und
- eine Druckschutzschicht aus einem bevorzugt opaken zweiten Kunststoffmaterial aufweist, wobei
- die Druckträgerschicht und die Druckschutzschicht so miteinander verbunden sind, dass die Designdruckschicht zwischen der Druckträgerschicht und der Druckschutzschicht eingeschlossen ist.

Weiterhin sind aus dem Stand der Technik Sicherheitsdokumente bekannt, die ein so genanntes Inlay oder eine so genannte Inlay-Lage beinhalten. Ein Inlay kann hierbei eine Trägerlage, z.B. eine als Trägerfolie ausgebildete Trägerlage, umfassen, die mit aktiven und passiven elektrischen oder elektronischen Bauelementen bestückt wird. Die WO 2011/003518 A1 beschreibt ein Verfahren zur Herstellung eines Inlays für einen Folienverbund, insbesondere ein Inlay für die Weiterverarbeitung zu einem Wert- oder Sicherheitsdokument, bei dem eine Trägerfolie mit mehreren darauf angeordneten und einander zugeordneten elektronischen Bauelementen einer Bilderfassungseinrichtung zugeführt wird, durch welche zumindest die Position von einem elektronischen Bauelement als Nutzen erfasst wird. Weiter wird eine auf die Trägerfolie aufzubringende lasersensitive Ausgleichsfolie zunächst einer Laserschneideinrichtung zugeführt. Weiter werden die Ausgleichsfolie mit den daran eingebrachten Aussparungen und das Trägermaterial in einer Zusammenführstation zusammengeführt und passergenau zueinander ausgerichtet zu einem Inlay fixiert. Hierbei wird mit der Laserschneideinrichtung zur Herstellung der Aussparungen, mit einer weiteren Laserschneideinrichtung oder mit einer Markierungseinrichtung für jeden Nutzen oder eine Gruppe von Nutzen eine Steuermarke auf die Ausgleichsfolie in Abhängigkeit von der jeweiligen erfassten Position des elektronischen Bauelements auf der Trägerfolie aufgebracht.

In Verfahren zur Herstellung von mehrlagigen Sicherheitsprodukten werden verschiedene Lagen zusammengefügt und verbunden, beispielsweise durch eine Lamination oder durch nachträgliches Aufbringen, z.B. durch Verkleben. Bisher erfolgt eine Herstellung von Sicherheitsprodukten, die Individualisierungsdaten enthalten, stark sequentiell. So werden einzelne Verfahrensschritte zur Herstellung und Einbringung verschiedener Individualisierungsdaten in das Sicherheitsprodukt zeitlich nacheinander durchgeführt, wobei ein Verfahrensschritt frühestens dann durchgeführt werden kann, wenn ein vorheriger Verfahrensschritt abgeschlossen ist. Soll das Sicherheitsprodukt z.B. ein Volumenhologramm enthalten, so kann dieses Volumenhologramm bisher erst nach Fertigstellung eines Dokumentenkörpers auf diesen aufgebracht, beispielsweise aufgeklebt, werden. Dies erhöht jedoch nachteilig eine Zeitaufwand bei einer Produktion eines gewünschten individualisierten Sicherheitsprodukts, da erst der z.B. bereits Individualisierungsdaten enthaltende Dokumentenkörper bereitgestellt werden muss, bevor das Volumenhologramm aufgebracht werden kann.

Auch kann es vorkommen, dass z.B. ein elektronisches Element der Inlay-Lage defekt ist. Ein diese Inlay-Lage enthaltendes Sicherheitsdokument bildet Ausschuss bei der Produktion von Sicherheitsdokumenten. In bekannten Verfahren zur Herstellung von mehrlagigen Sicherheitsdokumenten, z.B. in der DE 10 2009 007 552 A1, wird eine personalisierte und/oder individualisierte Laminationslage während des Herstellungsprozesses ungeachtet einer Funktionsfähigkeit einer Inlay-Lage in das Sicherheitsdokument eingebracht. Ein die personalisierte und/oder individualisierte Laminationslage und eine defekte Inlay-Lage enthaltendes Sicherheitsdokument stellt hierbei ebenfalls Ausschuss dar. In diesem Fall ist es jedoch notwendig, dass zur Herstellung eines neuen Sicherheitsdokuments mit einer funktionierenden Inlay-Lage eine personalisierte und/oder individualisierte Laminationslage erneut bereitgestellt wird. Dies verlängert in nachteiliger Weise eine Durchlaufzeit bzw. Produktionszeit eines Sicherheitsdokuments.

Es stellt sich das technische Problem, ein Verfahren und eine Vorrichtung zur Herstellung eines mehrlagigen Sicherheitsproduktes, insbesondere eines mehrlagigen Sicherheitsdokuments, zu schaffen, welche eine Durchlaufzeit bzw. eine Fertigungszeit bei der Herstellung von Sicherheitsprodukten verkürzen. Die Lösung des technischen Problems ergibt sich durch die Gegenstände mit den Merkmalen der Ansprüche 1 und 11. Weitere vorteilhafte Ausgestaltungen der Erfindung ergeben sich aus den Unteransprüchen.

Vorgeschlagen wird ein Verfahren zur Herstellung eines mehrlagigen oder mehrschichtigen Sicherheitsproduktes, insbesondere eines mehrlagigen Sicherheitsdokuments, insbesondere einer Identitätskarte.

Es ist eine Grundidee des vorgeschlagenen Verfahrens, dass Verfahrensschritte, die zur Herstellung von individualisierten Laminationslagen notwendig sind, nicht sequentiell, sondern zumindest teilweise zeitlich parallel durchgeführt werden.

Als Sicherheitsdokument wird jedes Dokument bezeichnet, das eine physikalische Entität ist, die gegen ein unautorisiertes Herstellen und/oder Verfälschen durch Sicherheitsmerkmale geschützt sind. Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar oder umfasst ein solches. Beispiele für Sicherheitsdokumente, welche auch Wertdokumente umfassen, die einen Wert repräsentieren, umfassen beispielsweise Reisepässe, Personalausweise, Führerscheine, Identitätskarten, Banknoten, Postwertzeichen, Kreditkarten, Smartcards und Etiketten. Als Smartcards werden solche Sicherheitsdokumente bezeichnet, die ein Chipmodul umfassen, welches kontaktlos Informationen mit einem Verifikationsgerät austauschen kann. Hierfür umfasst eine Smartcard neben dem Chipmodul eine hiermit gekoppelte Antenne, die in den Dokumenten- oder Kartenkörper integriert ist. Eine verwendete Datenaustauschtechnik kann z.B. die so genannte RFID-Technik (Radio-Frequency-Identification-Technik) sein. Wie nachfolgend näher erläutert, kann das Chipmodul als auch die mit dem Chipmodul gekoppelte Antenne Bestandteil einer Inlay-Lage sein.

Das vorgeschlagene Verfahren umfasst die folgenden Verfahrensschritte.

In einem ersten Schritt erfolgt ein Erzeugen von Auftragsdaten zur Herstellung einer ersten individualisierten Laminationslage.

Vor dem ersten Verfahrensschritt kann ein Einlesen von allgemeinen Auftragsdaten erfolgen. Die allgemeinen Auftragsdaten enthalten hierbei produktspezifische Informationen über das herzustellende Sicherheitsprodukt, z.B. Informationen über einen Inhaber des Sicherheitsproduktes, über eine Serien- oder Dokumentennummer und weitere produktspezifische Informationen. Dann können die Auftragsdaten zur Herstellung in Abhängigkeit der eingelesenen allgemeinen Auftragsdaten erzeugt werden.

Die individualisierte Laminationslage bezeichnet hierbei eine Lage aus einem laminierfähigen Material, welche das Sicherheitsprodukt individualisierende Informationen und/oder eine zur Führung des Sicherheitsdokuments autorisierte Person personalisierende Informationen enthält. Derartig individualisierende und/oder personalisierende Informationen können auch als Individualisierungsdaten bezeichnet werden. Diese Informationen können z.B. als Sicherheitsmerkmale in der individualisierten Laminationslage enthalten sein. Solche Informationen können beispielsweise in Form eines Namens, einer Dokumenten- oder Seriennummer, einer Unterschrift, eines Lichtbilds oder eines Hologramms ein- oder aufgebracht werden.

Die Informationen der individualisierten Laminationslage können physikalisch auf oder in der Laminationslage enthalten sein. Beispielsweise können Informationen auf die Laminationslage, z.B. mittels eines Inkjet-Verfahrens, aufgedruckt und/oder, beispielsweise mittels eines Lasergravurverfahrens, eingraviert werden. Selbstverständlich sind auch andere Verfahren zur Integration der Informationen in die individualisierte Laminationslage vorstellbar. Die Laminationslage kann beispielsweise als Einzellage, insbesondere als Einzelfolie, ausgebildet sein. Der Begriff Laminationslage umfasst aber auch einen die Laminationslage beinhaltenden Lagenverbund, z.B. einen Lagenverbund mit einer oder mehreren Schutzlagen. Hierbei kann es möglich sein, dass vor einer Aufbringung der Laminationslage auf z.B. einen Trägerkörper mindestens eine Schutzlage von dem die Laminationslage beinhaltenden Lagenverbund abgezogen wird.

Die Auftragsdaten zur Herstellung der ersten individualisierten Laminationslage bilden hierbei elektronische Daten in Abhängigkeit derer ein Herstellungs- oder Bereitstellungsprozess der Laminationslage gesteuert werden kann. So kann aus diesen Auftragsdaten auch die entsprechende Individualisierung gerendert, d.h. erzeugt, werden.

Ein laminierfähiges Material kann beispielsweise ein Kunststoffmaterial sein. Als Kunststoffmaterial kommen insbesondere Derivate oder auch Kombinationen der folgenden Kunststoffe infrage: Polycarbonat (PC), insbesondere Bisphenol-A-Polycarbonat, Polyethylenterephthalat (PET), deren Derivate wie Glykol-modifiziertes PET (PET-G), Polyvinylchlorid (PVC), Acrylnitril-Butadien-Styrol (ABS), thermoplastische Elastomere (TPE), insbesondere thermoplastisches Polyurethan (TPU). Auch andere Polyurethane können eingesetzt werden. Zusätzlich können auch wärmehärtende Harze und/oder Kunststoffe oder Mehrkomponentensysteme verwendet werden.

Weiter erfolgt ein Erzeugen von Auftragsdaten zur Herstellung mindestens einer weiteren individualisierten Laminationslage. Die individualisierenden Informationen der weiteren individualisierten Laminationslage können hierbei von den individualisierenden Informationen der ersten individualisierten Laminationslage verschieden sein. Auch können die individualisierenden Informationen der weiteren individualisierten Laminationslage physikalisch verschieden von den individualisierenden Informationen der ersten individualisierten Laminationslage ausgebildet oder repräsentiert sein. So kann beispielsweise die erste individualisierte Laminationslage ein aufgedrucktes Lichtbild z.B. eines Inhabers des Sicherheitsproduktes enthalten, wobei die weitere individualisierte Laminationslage ein Volumenhologramm, z.B. mit einem Lichtbild des Inhabers des Sicherheitsproduktes, enthalten kann. Jedoch können oder müssen die Informationen der beiden Laminationslagen derselben Person zugeordnet sein, die zur Führung des Sicherheitsprodukts autorisiert ist.

Weiter erfolgt ein Bereitstellen der ersten individualisierten Laminationslage. In diesem Schritt kann die erste individualisierte Laminationslage z.B. hergestellt werden. Dies umfasst auch das Ein- oder Aufbringen zumindest eines Teils der vorhergehend erläuterten individualisierenden und/oder personalisierenden Informationen in oder auf eine Laminationslage. Es ist möglich, dass die erste individualisierte Laminationslage als Einzelnutzen bereitgestellt wird. Beispielsweise kann ein Laminationsband mit einer m-fachen Anzahl von Nutzen bereitgestellt werden, wobei die individualisierte Laminationslage durch einen Nutzen des Laminationsbandes gebildet wird. Das Laminationsband kann insbesondere als Polymerfolie oder Polycarbonat-Folie ausgebildet sein. Das Laminationsband kann insbesondere als Rollenware bereitgestellt werden.

Weiter erfolgt ein Bereitstellen der weiteren individualisierten Laminationslage. In diesem Schritt kann die weitere individualisierte Laminationslage z.B. hergestellt werden. Dies umfasst auch das Ein- oder Aufbringen zumindest eines Teils der vorhergehend erläuterten individualisierenden und/oder personalisierenden Information in oder auf eine Laminationslage. Z.B. kann ein weiteres Laminationsband mit einer vorbestimmten Anzahl von Nutzen bereitgestellt werden, wobei die weitere individualisierte Laminationslage durch einen Nutzen des weiteren Laminationsbandes gebildet wird. Auch das weitere Laminationsband kann als Polymerfolie oder Polycarbonat-Folie ausgebildet sein oder, wie nachfolgend erläutert, einen laminerfähigen Hologrammlagenverbund enthalten. Das weitere Laminationsband kann insbesondere als Rollenware bereitgestellt werden.

Das Erzeugen der Auftragsdaten zur Herstellung der ersten und der weiteren individualisierten Laminationslage kann hierbei zumindest teilweise, vorzugsweise vollständig, zeitlich parallel erfolgen. Hierbei kann z.B. eine Steuereinrichtung in Abhängigkeit von eingelesenen Auftragsdaten die jeweils entsprechenden Auftragsdaten zur Herstellung bestimmen.

Alternativ oder kumulativ kann das Bereitstellen oder Herstellen der ersten und der mindestens einen weiteren individualisierten Laminationslage zumindest teilweise, vorzugweise vollständig, zeitlich parallel erfolgen.

Z.B. kann das Erzeugen der Auftragsdaten zur Herstellung und/oder das Bereitstellen der ersten und der mindestens einen weiteren individualisierten Laminationslage jeweils gleichzeitig beginnen. Auch ist es möglich, dass das Erzeugen der Auftragsdaten zur Herstellung und/oder das Bereitstellen der ersten und der mindestens einen weiteren individualisierten Laminationslage gleichzeitig beendet wird. Die Auftragsdaten zur Herstellung können nach dem Erzeugen an entsprechende Einrichtungen zur Bereitstellung übertragen werden. In diesem Fall ist es möglich, dass auch die Übertragung der Daten zumindest teilweise parallel erfolgt, z.B. gleichzeitig beginnt und/oder gleichzeitig endet.

Um das parallele Erzeugen der Auftragsdaten und/oder Bereitstellen der individualisierten Laminationslagen zu ermöglichen, können geeignete Synchronisierungsmittel vorgesehen sein.

Hierdurch können Verfahrensschritte, die zur Herstellung eines Sicherheitsprodukts, welches mehrere individualisierte Laminationslagen enthält, notwendig sind, zumindest teilweise parallelisiert werden. Dies betrifft insbesondere die Verfahrensschritte, die zur Bereitstellung der individualisierten Laminationslagen notwendig sind. Durch die Parallelisierung ergibt sich in vorteilhafter Weise eine Verkürzung der Durchlaufzeit bei der Herstellung des Sicherheitsprodukts im Vergleich zu einer sequentiellen Bereitstellung der individualisierten Laminationslagen.

Weiter kann eine Prüfung der ersten und der mindestens einen weiteren individualisierten Laminationslage erfolgen. Wird eine fehlerhafte individualisierte Laminationslage detektiert, so kann in einem Folgeauftrag eine erneute Erzeugung von Auftragsdaten zur Herstellung und Bereitstellung der ersten sowie der mindestens einen weiteren Laminationslage erfolgen.

Weiter erfolgt ein Aufbringen der ersten individualisierten Laminationslage auf einen Trägerkörper, z.B. mittels einer Einrichtung zur Aufbringung, die auch als Kaschierstation bezeichnet werden kann. Der Trägerkörper kann beispielsweise aus laminierfähigem Material bestehen.

Weiter erfolgt ein Aufbringen der mindestens einen weiteren individualisierten Laminationslage auf den Trägerkörper. Das Aufbringen der individualisierten Laminationslagen kann hierbei sequentiell, also zeitlich aufeinander folgend, erfolgen. So kann die weitere individualisierte Laminationslage auf einen Lagenverbund aufgebracht werden, der bereits den Trägerkörper und die erste individualisierte Laminationslage enthält.

Ein Verfahren zur Aufbringung ist beispielsweise in der DE 10 2009 007 552 A1 beschrieben. Hierdurch kann in vorteilhafter Weise ein Herstellungsprozess des Sicherheitsprodukts mit dem Prinzip "rund auf flach" durchgeführt werden. Z.B. kann das erste Laminationsband und das weitere jeweils von einer Rolle abgezogen und z.B. einer Kaschierstation zur Aufbringung des Laminationsbandes auf den Trägerkörper zugeführt werden. Das Aufbringen oder Aufkaschieren kann hierbei über eine Walze erfolgen. Durch diese Vorgehensweise wird, wie in der DE 10 2009 007 552 A1 beschrieben, in vorteilhafter Weise ermöglicht, dass ein in einer Transportebene zugeführter Trägerkörper sowohl in x-Richtung, also in Transportrichtung, als auch in y-Richtung, also quer zur Transportrichtung, zur Kaschierposition einstellbar ist und die abgezogene Rollenbahn analog einstellbar ist, sodass eine exakte Positionierung zueinander ermöglicht wird. Somit kann eine prozesstechnisch einfache Ausrichtung des Trägerkörpers zu beispielsweise Nutzen des entsprechenden Laminationsbandes erfolgen.

Alternativ können jedoch auch Einzelabschnitte, z.B. Einzelfolienabschnitte, auf den Trägerkörper aufgebracht und an diesem befestigt werden, z.B. mittels Ultraschall-Heften.

Weiter erfolgt eine Lamination des aus mindestens dem Trägerkörper, der ersten individualisierten Laminationslage und der mindestens einen weiteren individualisierten Laminationslage bestehenden Lagenverbundes. Eine Lamination bezeichnet hierbei eine Verbindung der einzelnen Lagen des Sicherheitsproduktes durch eine Applikation von Druck und/oder Wärmeenergie.

Das herzustellende Sicherheitsprodukt, insbesondere Sicherheitsdokument, beinhaltet also mindestens die beiden individualisierten Laminationslagen. Das vorgeschlagene Verfahren ermöglicht durch die vorhergehend beschriebene Parallelisierung eine Verkürzung einer Durchlaufzeit oder Herstellungszeit des Sicherheitsprodukts.

In einer bevorzugten Ausführungsform ist zumindest eine der individualisierten Laminationslagen, beispielsweise die mindestens eine weitere individualisierte Laminationslage, als laminierfähiger Hologrammlagenverbund ausgebildet.

Hierbei enthält ein Hologrammlagenverbund mindestens eine Lage oder Schicht, die ein Hologramm, insbesondere ein Volumenhologramm, enthält oder in die, z.B. durch ein geeignetes Belichtungsverfahren, ein Hologramm eingebracht oder eingefügt werden kann. Eine derartige Lage oder Schicht kann beispielsweise eine Silberhalogenidlage, eine Dichromat-Gelatine-Lage oder, vorzugsweise, eine Photopolymer-Lage sein. Hierdurch ergibt sich in vorteilhafter Weise, dass eine das Hologramm enthaltende Lage nicht wie bisher üblich nach einer Lamination auf das fertige Laminat aufgeklebt werden muss, sondern bereits durch die Lamination in das Sicherheitsprodukt integriert werden kann. Das Hologramm kann ein personalisiertes oder nicht personalisiertes Hologramm sein.

Eine Photopolymer-Lage kann, insbesondere in Alleinstellung, nicht laminierfähig sein. Dies bedeutet, dass sich eine in einen zu laminierenden Lagenverbund eingebrachte Photopolymer-Lage bei der Lamination nicht mit den weiteren Lagen verbinden kann. Somit ist es nicht möglich, eine Photopolymer-Lage in Alleinstellung während der Herstellung des Sicherheitsproduktes auf weitere Lagen aufzubringen und dann eine Lamination durchzuführen.

Durch die Ausbildung mindestens einer individualisierten Laminationslage als laminierfähiger Hologrammlagenverbund kann in vorteilhafter Weise ein Hologramm, insbesondere ein Volumenhologramm, auch in dem vorgeschlagenen, parallelisierten Verfahren zur Herstellung des mehrlagigen Sicherheitsproduktes in das Sicherheitsprodukt eingebracht werden. Hierdurch ist kein herstellungsverlängerndes Aufkleben des Hologramms bzw. eines das Hologramm enthaltenden Hologrammkörpers nach der Lamination mehr erforderlich. Insbesondere kann durch nur einen Laminationsschritt das Hologramm in das Sicherheitsprodukt eingebracht werden.

Es wird auch ein Verfahren zur Herstellung eines laminierfähigen Hologrammlagenverbundes, insbesondere eines laminierfähigen Photopolymer-Lagenverbundes, beschrieben. Das Verfahren kann eine eigene Erfindung darstellen.

Hierbei wird in einem ersten Verfahrensschritt ein zumindest einseitig unbeschichteter Hologrammkörper, insbesondere ein Photopolymerkörper, bereitgestellt. Z.B. ist möglich, dass der zumindest einseitig unbeschichtete Hologrammkörper bereitgestellt wird, indem mindestens eine Deckschicht eines Verbundes entfernt wird, wobei der Verbund den Hologrammkörper, insbesondere die Hologrammschicht, und die mindestens eine Deckschicht aufweist. Beispielsweise kann ein mit einer weiteren Lage, z.B. einer Schutzlage, versehener Hologrammkörper entblättert werden, wobei die weitere Lage von dem Hologrammkörper entfernt, z.B. abgezogen, wird.

Weiter erfolgt eine Bereitstellung mindestens eines Laminationskörpers. Der Laminationskörper besteht aus einem laminierfähigen Material. Insbesondere kann der Laminationskörper aus Polycarbonat bestehen. Selbstverständlich kann der Laminationskörper aber auch aus einem oder mehreren der vorhergehend erläuterten Kunststoffmaterialien bestehen.

Hiernach erfolgt eine Aufbringung eines Klebstoffes, insbesondere eines reaktiven Klebstoffes, auf zumindest einen Teil einer Oberfläche der unbeschichteten Seite des Hologrammkörpers und/oder auf zumindest einen Teil einer zu verklebenden Oberfläche eines Laminationskörpers. Der zu verklebende Teil der Oberfläche des Laminationskörpers bezeichnet hierbei einen Teil, der auf die unbeschichtete Oberfläche des Hologrammkörpers aufgebracht werden soll. Das Aufbringen des Klebstoffes kann hierbei beispielsweise durch Beschichten, Gießen oder Aufrakeln erfolgen. Der Klebstoff kann hierbei ein UV (Ultra-Violett)-Klebstoff und/oder ein Klebstoff zur thermischen Vernetzung sein. Der Klebstoff kann hierbei ein einstufiger oder zweistufig reagierender Klebstoff sein.

Der Klebstoff kann auch ein reaktiver Klebstoff sein. Reaktive Klebstoffe sind solche, bei welchen eine Vernetzung eines Grundpolymers unter Vernetzungsbedingungen erfolgt. Diese unterscheiden sich von den rein thermoplastischen Klebstoffen, wie beispielsweise Schmelzkleber, dadurch, dass der Klebstoff Polymere, Substanzen oder chemische Gruppen enthält, die miteinander zu reagieren vermögen, wobei durch diese Reaktion eine Erhöhung des Molekulargewichtes des Grundpolymers um zumindest den Faktor 2, meist 10 und mehr, erfolgt. Bei den Schmelzklebern erfolgt eine solche Molekulargewichtserhöhung dagegen nicht. Als reaktive Klebstoffe sind grundsätzlich verschiedenste Systeme einsetzbar. Infrage kommen einerseits Einkomponentensysteme, also fertig gemischte Zubereitungen, mit je nach Bedarf unterschiedlich langen Topfzeiten. Hierunter fallen wärmevernetzbare Systeme mit einem Grundpolymer und einem wärmeaktivierten Vernetzer. Dies umfasst Epoxide, Urethane, Polyester und Polymide. Hierunter fallen des Weiteren strahlungsvernetzbare Systeme, welche meist auf Acrylbasis aufgebaut sind. Schließlich umfasst dies Systeme, die durch Feuchtigkeit vernetzen, worunter Cyanacrylate und Urethane fallen. Infrage kommen aber ebenso Zweikomponentensysteme, bei welchen Grundpolymer und Vernetzungsmittel erst kurz vor der Erzeugung der Klebstoffschicht miteinander gemischt werden und die Vernetzung ohne die Notwendigkeit der Zufuhr von Wärme oder Strahlung erfolgt. Hierbei handelt es sich meist um Acrylate, Urethane, Polyester und Epoxide. Bevorzugt sind aufgrund der einfacheren Verarbeitung Einkomponentensysteme.

Weiter erfolgt eine Aufbringung des mindestens einen Laminationskörpers auf die mit Klebstoff beschichtete Oberfläche des Hologrammkörpers und ein Verkleben des Laminationskörpers mit dem Hologrammkörper. Vor der Aufbringung des Laminationskörpers kann hierbei eine Ausrichtung des Hologrammkörpers zum Laminationskörper erfolgen.

Hierdurch ergibt sich in vorteilhafter Weise, dass der Hologrammkörper nur einseitig mit einem Laminationskörper verklebt werden muss, was einen Herstellungsprozess des laminierfähigen Hologrammlagenverbundes vereinfacht.

Der Hologrammkörper, insbesondere der Photopolymerkörper, kann als Hologrammfolie, insbesondere als Photopolymerfolie, ausgebildet sein. Auch der Laminationskörper kann folienartig, z.B. als Polycarbonatfolie, ausgebildet sein.

Auch ist möglich, dass ein zweiseitig unbeschichteter Hologrammkörper bereitgestellt wird. Weiter kann ein erster und ein weiterer Laminationskörper bereitgestellt werden.

Hiernach kann ein Klebstoff auf zumindest einen Teil einer Oberfläche einer ersten Seite des Hologrammkörpers und auf zumindest einen Teil einer Oberfläche einer zweiten Seite des Hologrammkörpers aufgebracht werden. Alternativ oder kumulativ kann der Klebstoff auf zumindest einen Teil einer zu verklebenden Oberfläche des ersten Laminationskörpers und/oder des weiteren Laminationskörpers aufgebracht werden.

Anschließend wird der erste Laminationskörper auf die Oberfläche der ersten Seite des Hologrammkörpers und der weitere Laminationskörper auf die Oberfläche der zweiten Seite des Hologrammkörpers aufgebracht und beide mit dem Hologrammkörper verklebt. Es ist möglich, dass der Hologrammkörper von dem ersten Laminationskörper und dem zweiten Laminationskörper umschlossen wird, wobei sich der erste Laminationskörper bei einer Lamination mit dem zweiten Laminationskörper verbinden kann. Es ist jedoch auch möglich, dass der erste Laminationskörper und der zweite Laminationskörper derart mit dem Hologrammkörper verklebt werden, dass bei einer Lamination keine Verbindung des ersten mit dem zweiten Laminationskörper erfolgt. Ein Zusammenhalt des entstehenden Laminats im Bereich des Hologrammkörpers wird hierbei durch die Klebeverbindungen gewährleistet.

Ein nur einseitig mit einem Laminationskörper verklebter Hologrammkörper kann z.B. als äußere Lage eines mehrlagigen Sicherheitsproduktes verwendet werden. Bei einer beidseitigen Aufbringung eines Laminationskörpers auf den Hologrammkörper kann in vorteilhafter Weise dieser entstehende Hologrammlagenverbund eine innere Lage eines mehrlagigen Sicherheitsproduktes bilden.

Es ist auch möglich, dass auf eine erste unbeschichtete Seite eines zweiseitig unbeschichteten Hologrammkörpers der erste Laminationskörper aufgebracht wird, wobei auf der weiteren unbeschichteten Seite ein Schutzkörper, beispielsweise eine kratzfeste Polycarbonat-Folie oder eine PET-Folie oder eine Mischung aus diesen Folien, aufgebracht wird. Ein solcher Hologrammkörper kann dann ebenfalls als äußere Lage eines mehrlagigen Sicherheitsproduktes verwendet werden.

In einer weiteren Ausführungsform bildet die als laminierfähiger Hologrammlagenverbund ausgebildete Laminationslage eine Decklage des mehrlagigen Sicherheitsproduktes bildet. Eine Decklage bezeichnet hierbei eine äußere oder außenliegende Lage des Sicherheitsproduktes.

Das beschriebene Verfahren zur Herstellung eines laminierfähigen Hologrammlagenverbundes und das vorgeschlagene Verfahren zur Herstellung eines mehrlagigen Sicherheitsproduktes, welches einen solchen laminierfähigen Hologrammlagenverbund enthält, wirken hierbei synergistisch zusammen, da nur durch die Ausbildung eines laminierfähigen Hologrammlagenverbundes ein Hologrammkörper zeitlich parallelisiert zu weiteren individualisierten Laminationslagen bereitgestellt und in einem einzigen Laminationsschritt in das Sicherheitsprodukt eingefügt werden kann. Da kein nachträgliches Aufkleben des Hologrammkörpers auf das Laminat erfolgen muss, wird eine Herstellung eines Sicherheitsprodukts, welches den Hologrammkörper enthält, zeitlich beschleunigt.

In einer alternativen Ausführungsform bildet die als laminierfähiger Hologrammlagenverbund ausgebildete Laminationslage eine Innenlage des mehrlagigen Sicherheitsproduktes. Eine Innenlage bezeichnet hierbei eine innere Lage des Sicherheitsproduktes, also eine Lage, die beidseitig von mindestens einer weiteren Lage des Sicherheitsproduktes umgeben ist.

Hierdurch ergibt sich in vorteilhafter Weise eine erhöhte Flexibilität bei einer Anordnung des laminierfähigen Hologrammlagenverbundes innerhalb des herzustellenden mehrlagigen Sicherheitsproduktes.

In einer weiteren Ausführungsform ist die verbleibende individualisierte Laminationslage, beispielsweise die erste individualisierte Laminationslage, als bedruckte Laminationslage ausgebildet. Insbesondere kann die bedruckte Laminationslage mittels eines Inkjet-Verfahrens bedruckt sein und beispielsweise ein Lichtbild und/oder eine Dokumenten- oder Seriennummer des Sicherheitsproduktes aufweisen. Die bedruckte Laminationslage kann hierbei insbesondere aus Polycarbonat bestehen.

Hierdurch ergibt sich in vorteilhafter Weise, dass sowohl eine mit individualisierten Informationen bedruckte Lage als auch eine mit individualisierten Informationen versehene Hologrammlage durch einen einzigen Laminationschritt miteinander verbunden werden.

In einer weiteren Ausführungsform werden zusätzlich folgende Verfahrensschritte durchgeführt.

Zuerst wird eine Inlay-Lage oder ein die Inlay-Lage beinhaltender Lagenverbund bereitgestellt. Der Begriff Bereitstellen umfasst hierbei, dass die Inlay-Lage oder der die Inlay-Lage beinhaltende Lagenverbund auf einen im Fertigungsprozess bereits hergestellten Lagenverbund aufgebracht werden kann. Eine Inlay-Lage bezeichnet hierbei eine Lage oder Schicht aus einem laminierfähigen Material, welche elektrische und/oder elektronische Bauelemente enthält. Die elektrischen und/oder elektronischen Bauelemente können aktive oder passive Bauelemente sein. Beispielsweise kann die Inlay-Lage Spulen, Kondensatoren, Anzeigeelemente, wie Displays, Batterien, integrierte Schaltkreise, Mikroprozessoren und/oder Speicherelemente enthalten. Insbesondere kann die Inlay-Lage einen Halbleiterchip und mit dem Halbleiterchip verbundene Antennenspulen enthalten. Diese dienen einem Datenaustausch z.B. über die vorhergehend erläuterte RFID-Technik.

Zur Herstellung einer Inlay-Lage können die elektronischen Bauelemente z.B. auf eine Trägerlage, die z.B. durch eine Trägerfolie gebildet wird, aufgebracht werden. Auch können die elektrischen oder elektronischen Bauelemente in einen Lagenverbund, z.B. einen Folienverbund, bereits einlaminiert sein.

Die Inlay-Lage bzw. der die Inlay-Lage beinhaltende Lagenverbund besteht hierbei aus einem laminierfähigen Material.

Ein die Inlay-Lage beinhaltender Lagenverbund kann neben der Inlay-Lage eine oder mehrere weitere Lagen aus einem laminierfähigen Material beinhalten. So kann der Lagenverbund beispielsweise eine oder mehrere Drucklagen und/oder eine oder mehrere Schutzlagen enthalten. Eine Drucklage bezeichnet hierbei eine Lage, die aufgedruckte Informationen, z.B. auch Sicherheitsmerkmale, enthält.

Weiter erfolgt eine Überprüfung einer Funktionsfähigkeit der Inlay-Lage. Hierbei wird geprüft, ob ein korrekter Datenaustausch mittels der Inlay-Lage oder dem die Inlay-Lage beinhaltenden Lagenverbund möglich ist. Auch kann eine Funktionsfähigkeit mindestens eines elektrischen oder elektronischen Elements der Inlay-Lage geprüft werden. Hierbei wird z.B. getestet, ob ein Defekt eines Elements oder eine ungewünschte Abweichung von Soll-Eigenschaften, z.B. von einem Soll-Widerstand, einer Soll-Kapazität oder einer Soll-Induktivität, vorliegt. Auch kann getestet werden, ob eine ungewünschte Abweichung von einer Soll-Resonanzfrequenz und/oder einer Soll-Güte eines Schwingkreises der Inlay-Lage vorliegt. Hierzu kann die Inlay-Lage oder der die Inlay-Lage beinhaltende Lagenverbund mittels einer Einrichtung zur Prüfung der Funktionsfähigkeit, die z.B. in eine Fertigungsstraße integriert ist, geprüft werden.

Weiter erfolgt eine Aufbringung der individualisierten Laminationslagen auf die Inlay-Lage oder den die Inlay-Lage beinhaltenden Verbund ausschließlich dann, falls die Funktionsfähigkeit gegeben ist.

Die Aufbringung der individualisierten Laminationslagen kann jeweils z.B. mittels Ultraschall-Heften erfolgen. Auch andere Verfahren zur Aufbringung bzw. Befestigung sind möglich. Ein beispielhaftes Verfahren zur Aufbringung einer individualisierten Laminationslage auf eine weitere Lage eines herzustellenden Sicherheitsproduktes ist in der eingangs erwähnten DE 10 2009 007 552 A1 beschrieben. Hierbei wird eine Polymerfolie, welche die Laminationslage bildet, als Rollenware bereitgestellt und mit zumindest einem Streifen mit einer n-fachen Anzahl an Nutzen einer Kaschierstation zugeführt und kaschiert. Vor dem Kaschieren wird eine Steuerlinie auf der Polymerfolie abgefragt, die dem zumindest einen auf dem jeweiligen Nutzen aufzubringenden Sicherheitsmerkmal zugeordnet ist, oder eine dem Nutzen oder dem Streifen zugeordnete Referenzmarke abgefragt oder die Steuerlinie und die Referenzmarke abgefragt. Weiter wird eine Zuführgeschwindigkeit oder eine Zuführungsrichtung oder beides von der Rollenbahn der Polymerfolie und dem Streifen zur exakten Ausrichtung zueinander angepasst. Ein solches Verfahren ermöglicht vor der Aufbringung der personalisierten und/oder individualisierten Laminationslage auf die Inlay-Lage oder den die Inlay-Lage beinhaltenden Lagenverbund, dass diese zueinander ausgerichtet werden.

Das vorgeschlagene Verfahren ermöglicht in vorteilhafter Weise, dass die individualisierten Laminationslagen nur dann in ein diese individualisierten Laminationslagen beinhaltendes Sicherheitsprodukt eingebracht werden, wenn eine Funktionsfähigkeit der Inlay-Lage und somit des Sicherheitsproduktes gegeben ist. Werden nämlich die individualisierten Laminationslagen auf eine defekte Inlay-Lage aufgebracht, so stellt das diese Lagen beinhaltende Sicherheitsprodukt Ausschuss des Herstellungsprozesses dar. In diesem Fall ist eine erneute Herstellung der individualisierten Laminationslagen notwendig. Dies ist zeit- und kostenintensiv, insbesondere wird eine Durchlaufzeit oder Fertigungszeit des die individualisierten Laminationslagen beinhaltenden Sicherheitsproduktes verlängert. Durch die vorgeschlagene Lösung werden die individualisierten Laminationslagen bei einer defekten Inlay-Lage nicht in das herzustellende Sicherheitsprodukt eingefügt. Zwar stellt das ohne die individualisierten Laminationslagen oder, wie nachfolgend näher erläutert, mit Ersatzlagen hergestellte Sicherheitsprodukt weiterhin Ausschuss dar, jedoch ist keine erneute Herstellung bzw. Bereitstellung der individualisierten Laminationslagen notwendig. Somit wird in vorteilhafter Weise eine Fertigungszeit des Sicherheitsproduktes verringert und Produktionskosten gesenkt.

In einer weiteren Ausführungsform wird anstelle der individualisierten Laminationslagen mindestens eine Ersatzlage auf die Inlay-Lage oder den die Inlay-Lage beinhaltenden Lagenverbund aufgebracht, falls die Funktionsfähigkeit nicht gegeben ist. Eine Ersatzlage besteht insbesondere aus einem laminierfähigen Material. Hierbei kann für jede individualisierte Laminationslage jeweils eine Ersatzlage aufgebracht werden. Beispielsweise kann die Ersatzlage die gleichen geometrischen Abmaße aufweisen wie die jeweilige individualisierte Laminationslage, insbesondere die gleiche Breite, die gleiche Höhe und/oder die gleiche Länge. Es ist jedoch bevorzugt, dass anstelle des Verbundes aus zwei oder mehreren, vorzugsweise allen, individualisierten Laminationslagen eine einzelne Ersatzlage aufgebracht wird. In diesem Fall kann diese Ersatzlage die geometrischen Abmaße des Verbundes aufweisen. Die Ersatzlage kann hierbei auch als Dummy-Lage bezeichnet werden. Durch Aufbringung der Ersatzlage können in vorteilhafter Weise prozesstechnische Randbedingungen und/oder Anforderungen nachfolgender Prozessschritte eingehalten werden. Hierdurch können in vorteilhafter Weise Störungen oder Ausfälle im Herstellungsprozess vermieden werden. Somit wird im Falle einer defekten Inlay-Lage der Herstellungsprozess des Sicherheitsproduktes fortgesetzt, wobei anstelle der individualisierten Laminationslagen jedoch jeweils eine Ersatzlage verwendet wird. Das die Ersatzlagen beinhaltende Sicherheitsprodukt durchläuft zwar den gesamten Herstellungsprozess, bildet jedoch Ausschuss. Wesentlich hierbei ist, dass der Herstellungsprozess nicht unterbrochen oder gestört wird. Die nicht verwendeten individualisierten Laminationslagen können in diesem Fall auf die im Herstellungsprozess als nächste folgende intakte, also funktionsfähige, Inlay-Lage aufgebracht werden und müssen nicht neu hergestellt werden.

Z.B. können eine erste individualisierte Laminationslage und eine weitere individualisierte Laminationslage auf die Inlay-Lage oder den die Inlay-Lage beinhaltenden Lagenverbund ausschließlich dann aufgebracht werden, falls die Funktionsfähigkeit der Inlay-Lage gegeben ist, wobei die erste individualisierte Laminationslage als bedruckte Laminationslage und die weitere individualisierte Laminationslage als laminierfähiger Hologrammlagenverbund ausgebildet ist.

Eine Inlay-Lage kann als Einzellage ausgebildet sein. Auch kann ein Inlay-Streifen mit einer n-fachen Anzahl von Nutzen bereitgestellt werden, wobei die Inlay-Lage des Sicherheitsprodukts durch einen Nutzen des Inlay-Streifens gebildet wird. Z.B. können die Inlay-Streifen bogenförmig bereitgestellt werden, wobei ein einzelner Inlay-Streifen aus dem Bogen ausgeschnitten oder ausgestanzt wird. Die Nutzen können hierbei hintereinander oder nebeneinander auf dem Inlay-Streifen angeordnet sein. Die Inlay-Streifen können hierbei flach, insbesondere mit einer vorbestimmten Höhe, ausgebildet sein. Weiter können die Inlay-Streifen z.B. auf einem Transportband transportiert werden. Hierbei ist es möglich, dass die Inlay-Streifen auf dem Transportband derart angeordnet werden, dass sie unmittelbar aneinander anliegen oder mit einem vorbestimmten Abstand voneinander transportiert werden. Ein Abstand zwischen zwei aufeinanderfolgenden Inlay-Streifen kann hierbei insbesondere derart gewählt werden, dass in Transportrichtung ein Abstand zwischen einem letzten Nutzen eines vorausgehenden Inlay-Streifens von einem ersten Nutzen eines nachfolgenden Inlay-Streifens gleich einem Abstand zwischen einzelnen Nutzen eines Inlay-Streifens ist. Alternativ können die Inlay-Streifen auf einem Trägerfolienband angeordnet werden, wobei das Trägerfolienband Bestandteil des mehrlagigen Sicherheitsprodukts ist, jedoch gleichzeitig als Transport- oder Schleppband dient.

Durch eine Vereinzelung zu Streifen wird ermöglicht, dass eine Aufbringung der Laminationslagen, insbesondere von die Laminationslagen beinhaltenden Laminationsfolien, z.B. Polymerfolien, vereinfacht wird. Selbstverständlich können auch mehrere Inlay-Streifen nebeneinander auf dem Transportband transportiert werden.

Die Bereitstellung und Aufbringung der ersten und der weiteren individualisierten Laminationslage wird exemplarisch für eine individualisierte Laminationslage beschrieben. Selbstverständlich kann sowohl die erste als auch die weitere individualisierte Laminationslage bzw. sowohl eine erste als auch eine weitere Ersatzlage wie nachfolgend beschrieben bereitgestellt und aufgebracht werden.

So kann z.B. ein Laminationsband mit einer m-fachen Anzahl von Nutzen bereitgestellt werden, wobei die individualisierte Laminationslage durch einen Nutzen des Laminationsbandes gebildet wird. Das Laminationsband kann insbesondere als Polymerfolie oder Polycarbonat-Folie ausgebildet sein. Ein Nutzen des Laminationsbandes kann auch der vorgehend beschriebene laminierfähige Hologrammlagenverbund sein. Die Anzahl m von Nutzen des Laminationsbandes kann hierbei größer als die Anzahl n von Nutzen des Inlay-Streifens sein. Das Laminationsband kann insbesondere als Rollenware bereitgestellt werden. Ein Abstand der Nutzen auf dem Laminationsband kann gleich einem Abstand der Nutzen auf einem Inlay-Streifen sein. Hierdurch kann in vorteilhafter Weise ein Herstellungsprozess mit dem Prinzip "rund auf flach" durchgeführt werden. Das Laminationsband kann hierbei von einer Rolle abgezogen und z.B. einer Kaschierstation zur Aufbringung des Laminationsbandes auf die Inlay-Streifen zugeführt werden. Das Aufbringen oder Aufkaschieren kann hierbei über eine Walze erfolgen. Durch diese Vorgehensweise wird, wie in der DE 10 2009 007 552 A1 beschrieben, in vorteilhafter Weise ermöglicht, dass ein in einer Transportebene zugeführter Inlay-Streifen sowohl in x-Richtung, also in Transportrichtung, als auch in y-Richtung, also quer zur Transportrichtung, zur Kaschierposition einstellbar ist und die abgezogene Rollenbahn analog einstellbar ist, sodass eine exakte Positionierung zueinander ermöglicht wird. Somit kann eine prozesstechnisch einfache Ausrichtung von Nutzen des Inlay-Streifens zu Nutzen des Laminationsbandes erfolgen.

Weiter kann ein Ersatzband mit einer Anzahl k von Nutzen bereitgestellt werden, wobei die Ersatzlage als ein Nutzen des Ersatzbandes ausgebildet ist. Die Anzahl k von Nutzen des Ersatzbandes kann hierbei größer als die Anzahl n von Nutzen des Inlay-Streifens sein. Auch kann die Anzahl k von Nutzen gleich der Anzahl m von Nutzen des Laminationsbandes sein. Die Anzahl von Nutzen kann jedoch auch verschieden sein.

Auch das Ersatzband kann als Polymerfolie, z.B. als Polycarbonat-Folie, ausgebildet sein. Nutzen des Ersatzbandes können hierbei die gleichen geometrischen Abmaße wie Nutzen des Laminationsbandes aufweisen.

Nach Aufbringung eines Nutzens des Laminationsbandes oder des Ersatzbandes kann eine Randbeschneidung des resultierenden Streifens erfolgen.

Durch die Bereitstellung von Ersatzlagen als Nutzen eines Ersatzbandes kann, entsprechend den Ausführungen zum Laminationsband, eine einfache Ausrichtung von Ersatzband zu Inlay-Streifen erfolgen. Weiterhin ist eine einfache prozesstechnische Integration der Aufbringung von Ersatzlagen auf defekte Inlay-Lagen gewährleistet.

Weiter kann vor oder während der Aufbringung eines Nutzens des Laminationsbandes auf ein Nutzen des Inlay-Streifens eine Vereinzelung des Nutzens des Laminationsbandes erfolgen. Eine Vereinzelung kann hierbei beispielsweise durch Aus- oder Abschneiden oder Ausstanzen erfolgen. Durch die Vereinzelung wird also ein Nutzen vom Laminationsband getrennt. Aufgrund der Vereinzelung erfolgt keine kontinuierliche, sondern eine sequentielle Aufbringung von Nutzen des Laminationsbandes auf den/die Nutzen des Inlay-Streifens, wodurch anstelle eines die individualisierte Laminationslage bildenden Nutzens auch ein die entsprechende Ersatzlage bildendes Nutzen aufgebracht werden kann. Insbesondere kann eine Kaschierstation zur Aufbringung des die Ersatzlage bildenden Nutzens in Transportrichtung hinter einer Kaschierstation zur Aufbringung des die individualisierte Laminationslage bildenden Nutzens angeordnet sein. Durch die Vereinzelung ergibt sich in vorteilhafter Weise, dass ein Nutzen des Laminationsbandes oder des Ersatzbandes selektiv auf ein Nutzen des Inlay-Streifens aufgebracht werden kann. Das Aufbringen eines vereinzelten Nutzens des Laminationsbandes oder des Ersatzbandes kann hierbei insbesondere mittels Ultraschall-Heften erfolgen.

Weiter kann der nach der Aufbringung der individualisierten Laminationslagen oder der Ersatzlagen entstehende Lagenverbund laminiert werden. Selbstverständlich können vor, nach oder zwischen der Aufbringung der individualisierten Laminationslagen oder der Ersatzlagen weitere Lagen aufgebracht werden. Nach der Lamination entsteht ein Laminat oder Laminatverbund, der das Sicherheitsprodukt ausbildet. Selbstverständlich ist es möglich, dass der Laminatverbund nach der Lamination noch mit einer Schutzschicht, die z.B. auflackiert wird, versehen werden kann. Ein die Ersatzlage(n) beinhaltender Laminatverbund bildet hierbei Ausschuss. Durch die Einbringung der Ersatzlage(n) kann der Fertigungsprozess trotz einer defekten Inlay-Lage, insbesondere auch die Lamination, durchgeführt werden, wodurch der Herstellungsprozess nicht unterbrochen wird. Eine Aussortierung von Ausschuss erfolgt hierbei nach der Lamination. Insbesondere weist/weisen das/die Ersatznutzen die gleiche geometrische Dimension auf, wie die eigentlich aufzubringende(n) Laminationslage(n). Somit entsteht vor und nach der Lamination ein Lagenverbund mit mindestens einer Ersatzlage, der die gleichen Dimensionen aufweist wie ein Lagenverbund mit mindestens einer individualisierenden Laminationslage.

In einer weiteren Ausführungsform wird mindestens ein Qualitätskriterium der ersten individualisierten Laminationslage ausgewertet, wobei die erste individualisierte Laminationslage verworfen wird, falls das mindestens eine Qualitätskriterium nicht erfüllt ist.

Alternativ oder, vorzugsweise, kumulativ wird mindestens ein Qualitätskriterium der weiteren individualisierten Laminationslage ausgewertet, wobei die weitere individualisierte Laminationslage verworfen wird, falls das mindestens eine Qualitätskriterium nicht erfüllt ist.

Durch das Auswerten mindestens eines Qualitätskriteriums kann eine Produktionsqualität der entsprechenden individualisierten Laminationslage überprüft werden. Dies kann z.B. durch eine optische, z.B. kamerabasierte, Überprüfung erfolgen. Beispielsweise kann/können eines, mehrere oder alle der nachfolgende angeführten Qualitätskriterien ausgewertet werden: a) Vorhandensein eines Sicherheitsmerkmals oder -elements, b) Vorhandensein einer gewünschten Druck- und/oder Farbqualität, c) Vorhandensein gewünschter geometrischer Abmaße. Selbstverständlich können auch weitere Qualitätskriterien ausgewertet werden. Die Auswertung kann hierbei mittels einer Auswerteeinrichtung erfolgen, die signal- oder datentechnisch mit einer Einrichtung zur Bilderfassung verbunden ist.

Verworfen bedeutet hierbei, dass die erste individualisierte Laminationslage nicht auf den Trägerkörper, insbesondere auf die Inlay-Lage oder den die Inlay-Lage beinhaltenden Lagenverbund, aufgebracht wird. In diesem Fall bildet die entsprechende Laminationslage Ausschuss. Zur Auswertung kann, beispielsweise sensorisch, mindestens eine Eigenschaft der individualisierten Laminationslage erfasst und hinsichtlich des Qualitätskriteriums ausgewertet werden. Somit ergibt sich in vorteilhafter Weise, dass eine individualisierte Laminationslage, die nicht den Qualitätsansprüchen genügt, nicht auf z.B. eine funktionsfähige Inlay-Lage aufgebracht wird.

Je nach Zeitpunkt der Aufbringung im Fertigungsprozess kann bei Nichterfüllung des mindestens einen Qualitätskriteriums einer individualisierten Laminationslage auch die korrespondierenden Laminationslage verworfen werden. Korrespondierend bedeutet hierbei, dass die erste und die weitere individualisierte Laminationslage demselben Sicherheitsprodukt zugeordnet sind und beispielsweise korrespondierende Informationen enthalten. Gegebenenfalls kann in diesem Fall auch ein Ersatznutzen aufgebracht werden.

In einer weiteren Ausführungsform wird ein Endnutzen, also z.B. das herzustellende Sicherheitsprodukt, nach der Lamination mit einem Endformat aus dem Laminat ausgestanzt.

In diesem Fall kann nach dieser Vereinzelung durch Ausstanzen Ausschuss, insbesondere ein Nutzen mit einer Ersatzlage, aussortiert werden. Wie vorhergehend angeführt, ergibt sich hierdurch in vorteilhafter Weise, dass ein Herstellungsprozess, der auch das vorhergehend erläuterte Ausstanzen eines Endnutzens umfasst, nicht unterbrochen werden muss.

Selbstverständlich kann im Herstellungsprozess eine zusätzliche Qualitätskontrolle und/oder eine Aufbringung einer Kratz- oder Abriebsschutzbeschichtung erfolgen.

In einer besonders bevorzugten Ausführungsform wird eine Übereinstimmung der individualisierten Laminationslagen geprüft. Übereinstimmung kann bedeuten, dass die individualisierten Laminationslagen demselben Sicherheitsprodukt zugeordnet sind. Hierbei wird z.B. überprüft, ob die erste und die weitere individualisierte Laminationslage korrespondierende Informationen enthalten. Z.B. kann eine Seriennummer, die in der ersten individualisierten Laminationslage enthalten ist, ausgelesen werden und mit einer Seriennummer, die in der weiteren individualisierten Laminationslage enthalten ist, verglichen und auf Übereinstimmung überprüft werden. Ist die Übereinstimmung nicht gegeben, so bildet das Laminat Ausschuss.

Weiter vorgeschlagen wird eine Vorrichtung zur Herstellung eines mehrlagigen Sicherheitsproduktes, insbesondere eines mehrlagigen Sicherheitsdokumentes. Die Vorrichtung kann hierbei insbesondere als Fertigungsstraße ausgebildet sein.

Die Vorrichtung umfasst mindestens eine Steuereinrichtung. Weiter umfasst die Vorrichtung eine erste Einrichtung zur Bereitstellung einer ersten individualisierten Laminationslage und eine weitere Einrichtung zur Bereitstellung einer weiteren individualisierten Laminationslage. Weiter umfasst die Vorrichtung eine erste Einrichtung zur Aufbringung der ersten individualisierten Laminationslage und eine weitere Einrichtung zur Aufbringung der weiteren individualisierten Laminationslage. Eine Einrichtung zur Aufbringung kann auch als Kaschierstation bezeichnet werden. Weiter umfasst die Vorrichtung eine Laminiereinrichtung.

Die Vorrichtung ist hierbei derart ausgebildet, dass mittels der Steuereinrichtung z.B. Auftragsdaten einlesbar sind. Weiter sind mittels der Steuereinrichtung Auftragsdaten zur Herstellung der ersten individualisierten Laminationslage und Auftragsdaten zur Herstellung der weiteren individualisierten Laminationslage erzeugbar. Die Auftragsdaten zur Herstellung der ersten individualisierten Laminationslage sind an die erste Einrichtung zur Bereitstellung einer ersten individualisierten Laminationslage und die Auftragsdaten zur Herstellung der weiteren individualisierten Laminationslage sind an die weitere Einrichtung zur Bereitstellung der weiteren individualisierten Laminationslage übertragbar. Hierzu ist die Steuereinrichtung datentechnisch mit den Einrichtungen zur Bereitstellung verbunden.

Die Einrichtungen zur Bereitstellung können hierbei mehrere Teileinrichtungen umfassen, die jeweils einzelne Schritte der Bereitstellung durchführen.

Mittels der ersten Einrichtung zur Bereitstellung ist die erste individualisierte Laminationslage und mittels der weiteren Einrichtung zur Bereitstellung die weitere individualisierte Laminationslage bereitstellbar.

Weiter ist mittels der ersten Einrichtung zur Aufbringung die erste individualisierte Laminationslage und mittels der weiteren Einrichtung zur Aufbringung die weitere individualisierte Laminationslage auf einen Trägerkörper aufbringbar. Der Trägerköper kann hierbei beispielsweise ein Kartenkörper sein, der beispielsweise aus laminierfähigem Material besteht oder laminierfähige Lagen umfasst. Auch kann der Trägerkörper die vorhergehend erwähnte Inlay-Lage enthalten.

Mittels der Laminiereinrichtung ist der aus mindestens dem Trägerkörper, der ersten individualisierten Laminationslage und der weiteren individualisierten Laminationslage bestehende Lagenverbund laminierbar.

Erfindungsgemäß ist die Vorrichtung derart ausgebildet, dass das Erzeugen der Auftragsdaten und/oder eine Übertragung der Auftragsdaten an die erste Einrichtung zur Bereitstellung sowie der Auftragsdaten an die weitere Einrichtung zur Bereitstellung und/oder das Bereitstellen der ersten und der mindestens einen weiteren individualisierten Laminationslage zumindest teilweise zeitlich parallel durchführbar ist.

Weiter kann die Vorrichtung mindestens eine Einrichtung zur Bereitstellung einer Inlay-Lage oder eines die Inlay-Lage beinhaltenden Lagenverbundes umfassen. Weiter kann die Vorrichtung mindestens eine Einrichtung zur Prüfung einer Funktionsfähigkeit der Inlay-Lage umfassen. Die Einrichtung zur Prüfung ist hierbei derart mit der ersten Einrichtung zur Aufbringung und der weiteren Einrichtung zur Aufbringung verbunden, dass die erste und die weitere individualisierte Laminationslage ausschließlich dann auf die Inlay-Lage oder den die Inlay-Lage beinhaltenden Lagenverbund aufbringbar ist, falls die Funktionsfähigkeit gegeben ist. Hierzu können die Einrichtungen zur Aufbringung derart mechanisch, elektrisch und/oder signaltechnisch mit der Einrichtung zur Prüfung verbunden oder gekoppelt sein, dass die individualisierten Laminationslagen ausschließlich dann auf die Inlay-Lage oder den die Inlay-Lage beinhaltenden Lagenverbund aufbringbar ist, falls die Funktionsfähigkeit gegeben ist.

Die Einrichtungen zur Aufbringung der individualisierten Laminationslagen können auch mittels der Steuereinrichtung derart steuerbar ein, dass die individualisierten Laminationslagen ausschließlich dann auf die Inlay-Lage oder den die Inlay-Lage beinhaltenden Lagenverbund aufbringbar ist, falls die Funktionsfähigkeit gegeben ist.

Hierzu kann die Steuereinrichtung daten- oder signaltechnisch mit den Einrichtungen zur Aufbringung und der Einrichtung zur Prüfung verbunden sein. Weiter kann die Vorrichtung ein Transportband umfassen. Weiter kann die Vorrichtung mindestens eine Einrichtung zur Prüfung einer Qualität der ersten und/oder der Weiteren individualisierten Laminationslage umfassen.

Die Erfindung wird anhand eines Ausführungsbeispiels näher erläutert. Die Fig. zeigen:
- Fig. 1: eine schematische Ansicht eines Sicherheitsproduktes,
- Fig. 2: eine schematische Ansicht eines laminierfähigen Hologrammlagenverbundes,
- Fig. 3: eine Draufsicht auf ein Transportband, welches Inlay-Streifen mit mehreren Nutzen transportiert,
- Fig. 4: eine Draufsicht auf ein Laminationsband mit mehreren Nutzen,
- Fig. 5: eine schematische Darstellung einer Vorrichtung zur Herstellung eines mehrlagigen Sicherheitsproduktes, und
- Fig. 6: ein schematisches Flussdiagramm eines erfindungsgemäßen Verfahrens zur Herstellung eines mehrlagigen Sicherheitsproduktes.

Nachfolgend bezeichnen gleiche Bezugszeichen Elemente mit gleichen oder ähnlichen technischen Merkmalen.

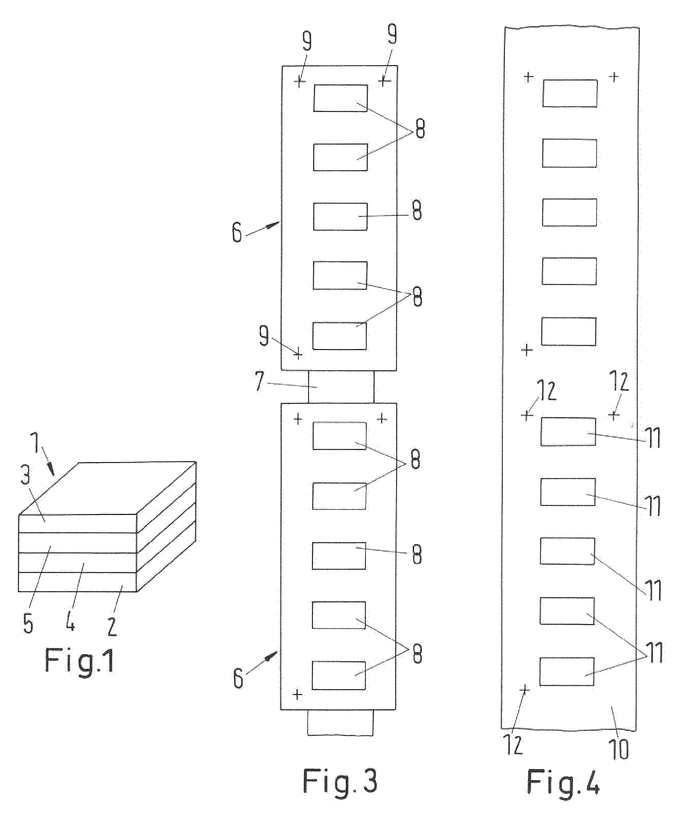

In Fig. 1 ist eine perspektivische Ansicht auf ein Sicherheitsprodukt 1 dargestellt, welches eine untere Decklage 2, eine Inlay-Lage 4, eine erste individualisierte Laminationslage 5 und eine weitere individualisierte Laminationslage 3, die als obere Decklage ausgebildet ist, beinhaltet. Das dargestellte Sicherheitsprodukt 1 kann auch als Endnutzen bezeichnet werden, wobei das Endnutzen als Personalausweis, Reisepass, Identifikationskarte, Zugangsberechtigung, Führerschein, Personalisierungsdatenseite eines buchartigen Wertdokuments oder dergleichen eingesetzt werden kann. Ein solches Endnutzen kann auch Sicherheitsmerkmale enthalten.

Die erste individualisierte Laminationslage 5 ist eine bedruckte Laminationslage, wobei individualisierende Informationen wie z.B. ein Lichtbild, eine Seriennummer und/oder ein Name eines Produktinhabers auf die Laminationslage 5 aufgedruckt sind.

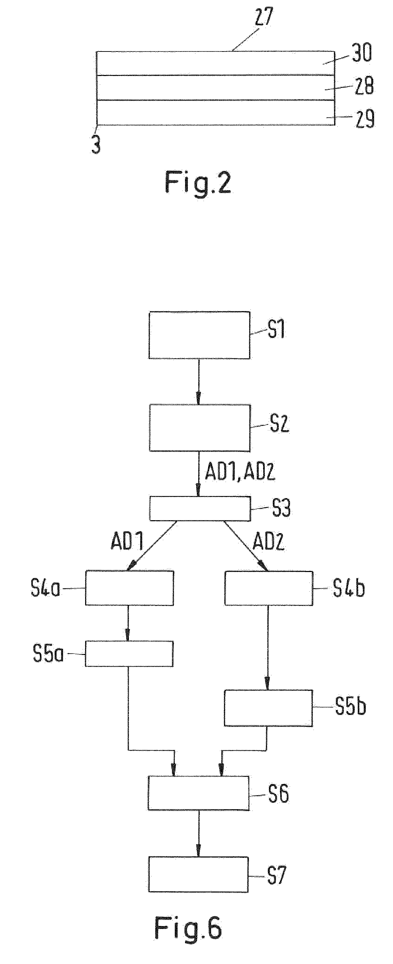

Die weitere individualisierte Laminationslage 3 ist als laminierfähiger Hologrammlagenverbund 27 ausgebildet, der detaillierter in Fig. 2 dargestellt ist. Die weitere individualisierte Laminationslage 3 enthält zumindest ein Volumenhologramm, wobei das Volumenhologramm eine physikalische Repräsentation von individualisierenden Informationen wie z.B. ein Abbild des Produktinhabers darstellt.

In Fig. 2 ist schematisch ein Aufbau eines laminierfähigen Hologrammlagenverbunds 27 dargestellt. Der Hologrammlagenverbund 27 enthält eine Photopolymerlage 28 und eine untere Laminationslage 29, die z.B. als Polycarbonatfolie ausgebildet ist. Die untere Laminationslage 29 ist mittels eines nicht dargestellten Klebstoffes mit einer Unterseite der Photopolymerlage 28 verklebt. Weiter enthält der Hologrammlagenverbund 27 eine kratzfeste Schutzlage 30. Diese Schutzlage 30 ist mit einer Oberseite der Photopolymerlage 28 verklebt. Die Schutzlage 30 kann als kratzfeste Polycarbonatfolie ausgebildet sein.

Bezogen auf das in Fig. 1 dargestellte Sicherheitsprodukt 1 ist die untere Laminationslage 29 des laminierfähigen Hologrammlagenverbunds 27, der die weitere individualisierte Laminationslage 3 bildet, auf der ersten individualisierten Laminationslage 5 angeordnet. Somit bildet die kratzfeste Schutzlage 30 eine äußere Schicht des Sicherheitsproduktes 1. Während einer Lamination kann sich der laminierfähige Hologrammlagenverbund 27, insbesondere die untere Laminationslage 29 des laminierfähigen Hologrammlagenverbunds 27, mit der ersten individualisierten Laminationslage 5 verbinden.

In Fig. 3 ist eine Draufsicht auf zwei Inlay-Streifen 6 dargestellt, die auf einem Transportband 7 angeordnet sind. In einem in Fig. 3 nicht näher dargestellten Bogen, insbesondere einem Bogenlaminat, sind mehrere Nutzen 8 hintereinander und nebeneinander enthalten. Aus diesem Bogen werden die Inlay-Streifen 6 ausgeschnitten, welche beispielsweise fünf Nutzen 8 umfassen. Die Nutzen 8 sind bevorzugt in einem vorbestimmten, insbesondere im gleichen, Abstand zueinander in einer Reihe hintereinander angeordnet und können sowohl im Längsformat als auch im Querformat hintereinander positioniert sein. Ein einzelner Nutzen 8 bildet hierbei die in Fig. 1 dargestellte Inlay-Lage 4 des Sicherheitsproduktes 1. Die Inlay-Streifen 6 werden auf das Transportband 7 aufgelegt und z.B. miteinander verbunden, sodass eine Endlosbahn von hintereinander angeordneten Inlay-Streifen 6 auf dem Transportband 7 transportiert wird. In Fig. 3 ist dargestellt, dass zwei Inlay-Streifen 6 auf dem Transportband 7 beabstandet voneinander angeordnet sind. Es ist selbstverständlich auch möglich, dass die zwei Inlay-Streifen 6 derart auf dem Transportband 7 angeordnet werden, dass sie unmittelbar aneinander anliegen und somit nicht voneinander beabstandet sind. Bei diesem Transportband 7 kann es sich um eine Folie oder dergleichen handeln, welche sicherstellt, dass ein Abstand zwischen den einzelnen Inlay-Streifen 6 trotz möglicher Spannungen während des Transportes aufrechterhalten bleibt. Auch können die Inlay-Streifen 6 nach dem Aufbringen auf das Transportband 7, miteinander flexibel verbunden werden, z.B. durch Klebeelemente. Eine Anpassung des Abstandes der einzelnen Inlay-Streifen 6 kann in allen Fällen z.B. durch ein Greifersystem erfolgen, das die miteinander verbundenen Inlay-Streifen 6 transportiert und individuell positioniert. Auf einem Inlay-Streifen 6 ist zumindest eine Referenzmarke 9 vorgesehen. Bevorzugt sind drei als Passermarken ausgebildete Referenzmarken 9 aufgebracht, um die Lage des Inlay-Streifens 6, z.B. optisch, erfassen zu können und hinsichtlich einer Transportrichtung in x-Richtung und/oder in y-Richtung vor einem Kaschierprozess mit der in Fig. 3 dargestellten Laminationsfolie 10 ausrichten zu können.

Alternativ zu der vorbeschriebenen Positionierung der Inlay-Streifen 6 hintereinander auf dem Transportband 7 kann vorgesehen sein, dass diese Inlay-Streifen 6 unmittelbar auf das Transportband 7 aufgelegt werden und während dem Auflegen der einzelnen Inlay-Streifen 6 hintereinander die analoge Ausrichtung der Inlay-Streifen 6 zueinander wie beim Aufbringen, das vorhergehend erläutert wurde, erfolgt. Auch kann das Transportband 7 als Vakuumband ausgebildet und insbesondere als Endlosband vorgesehen sein.

In Fig. 4 ist eine Draufsicht auf ein als Laminationsfolie 10 ausgebildetes Laminationsband dargestellt, welche Nutzen 11 enthält. Ein einzelner Nutzen 11 der Laminationsfolie 10 bildet z.B. die in Fig. 1 dargestellte erste individualisierte Laminationslage 5 des Sicherheitsproduktes 1. Z.B. kann auf die Nutzen 11 ein Lichtbild, eine Seriennummer und ein Name aufgedruckt sein. Diese können gleichzeitig Sicherheitsmerkmale darstellen, wobei die Nutzen 11 selbstverständlich auch weitere Sicherheitsmerkmale enthalten können. Es sei angemerkt, dass ein Laminationsband, welches Nutzen enthält, die jeweils einen z.B. in Fig. 2 dargestellten laminierfähigen Hologrammlagenverbund 27 bilden, genau wie das in Fig. 4 dargestellte Laminationsband ausgebildet sein kann.

Bevorzugt ist vorgesehen, dass ein Abstand zwischen Nutzen 11 der Laminationsfolie 10 gleich einem Abstand der Nutzen 8 eines Inlay-Streifens 6 ist. Die Laminationsfolie 10 kann zusätzlich Referenzmarken 12 aufweisen, die in der Anordnung mit den Referenzmarken 9 der Inlay-Streifen 6 übereinstimmen. Diese jeweiligen Referenzmarken 9, 12 bzw. Passermarken können zumindest vor einem Kaschierprozess jeweils optisch erfasst werden, wodurch ermöglicht ist, dass die Laminationsfolie 10 in x-Richtung, also in Transportrichtung, als auch in y-Richtung, also quer zur Transportrichtung, ausgerichtet wird und auf die Zuführungsposition der Inlay-Streifen 6 angepasst werden kann. Somit kann eine lagerichtige Anordnung von Nutzen 11, insbesondere von in dem Nutzen 11 enthaltenen Sicherheitsmerkmalen, gegeben sein.

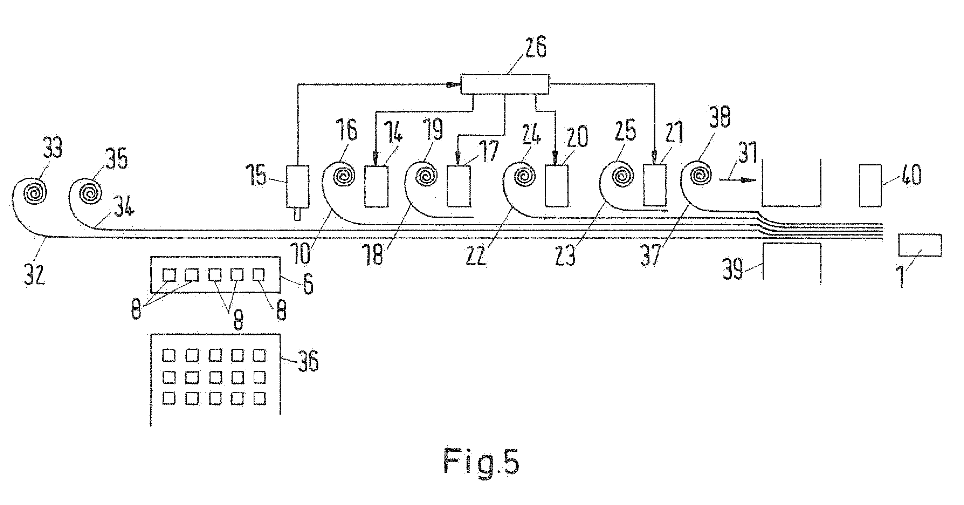

In Fig. 5 ist eine Vorrichtung zur Herstellung eines Sicherheitsproduktes 1 (siehe Fig. 1) in einer bevorzugten Ausführungsform dargestellt, mittels derer das vorhergehend erläuterte Verfahren zur Herstellung des mehrlagigen Sicherheitsproduktes 1 durchführbar ist. Eine Trägerfolienband 32 wird als Rollenware bereitgestellt und von einer Rolle 33 abgewickelt. In Transportrichtung 31 hinter der Rolle 33 wird ein weiteres Folienband 34 ebenfalls als Rollenware bereitgestellt und von einer Rolle 35 abgewickelt. Das weitere Folienband 34 kann z.B. als Druckfolien ausgebildete Nutzen umfassen, die aufgedruckte Informationen enthalten. Das Trägerfolienband 32 und das weitere Folienband 34 werden verbunden, z.B. mittels Ultraschall-Heften. Selbstverständlich können noch mehr als die dargestellten Folienbänder 32, 34 bereitgestellt und miteinander verbunden werden. In Transportrichtung 31 hinter der Rolle 35 wird ein Inlay-Streifen 6 bereitgestellt, der mehrere Nutzen 8 (siehe Fig. 3) umfasst. Der Inlay-Streifen 6 wird hierfür aus einem Bogen 36 ausgestanzt. Anschließend erfolgt in einer Übergabestation ein Auflegen der Inlay-Streifen 6 auf den Folienbandverbund, der aus Trägerfolienband 32 und weiterem Folienband 34 besteht. In diesem Fall stellt das Trägerfolienband 32, welches einen Bestandteil des Sicherheitsprodukts 1 bildet, gleichzeitig ein Schleppband zur Auflage der Inlay-Streifen 6 bereit. Dieser Folienbandverbund kann alternativ auf einem Transportband (nicht dargestellt) transportiert werden, welches z.B. als Vakuumband ausgestaltet sein kann. Das Transportband kann als Endlosband ausgebildet sein.

Zum Auflegen werden die Inlay-Streifen 6 positioniert, z.B. mittels eines Greifersystems. Die Nutzen 8 auf dem jeweiligen Inlay-Streifen 6 bilden, wie vorhergehend erläutert, jeweils eine Inlay-Lage 4 des herzustellenden Sicherheitsproduktes 1.

Es ist selbstverständlich möglich, dass in Transportrichtung 31 vor oder nach dem Auflegen der Inlay-Streifen 6 weitere Streifen auf den Folienbandverbund aufgelegt werden, die aus weiteren (nicht dargestellten) Bögen ausgestanzt werden. Diese können beispielsweise Streifen oder Folienstreifen sein, die bedruckte Nutzen umfassen.

Auch die Inlay-Streifen 6 werden mit dem Folienbandverbund verbunden, z.B. mittels Ultraschall-Heften, und dann einer ersten Kaschierstation 14 zugeführt. In Transportrichtung vor der ersten Kaschierstation 14 ist eine Prüfstation 15 angeordnet. Die Prüfstation 15 überprüft eine Funktionsfähigkeit mindestens eines elektrischen oder elektronischen Elements (nicht dargestellt) der Inlay-Lage 4, die durch die Nutzen 8 der Inlay-Streifen 6 gebildet werden. Die erste Kaschierstation 14 bildet eine Einrichtung zur Aufbringung von Nutzen 11 einer Laminationsfolie 10, welche eine erste individualisierte Laminationslage 5 (siehe Fig. 1) des Sicherheitsproduktes 1 bilden. Die Laminationsfolie 10 ist als Rollenware bereitgestellt und wird von einer Rolle 16 abgewickelt. Vor der Aufbringung kann eine nicht dargestellte Deckschicht oder Schutzschicht von der Laminationsfolie 10 entfernt werden. Hierbei wird ein Nutzen 11 der Laminationsfolie 10 vor der Aufbringung auf ein Nutzen 8 eines Inlay-Streifens 6 vereinzelt. Eine Aufbringung eines Nutzens 11 auf einen Nutzen 8 des Inlay-Streifens 6 erfolgt jedoch nur dann, wenn eine Funktionsfähigkeit der elektrischen oder elektronischen Elemente des Nutzens 8 gegeben ist.

Andernfalls erfolgt keine Aufbringung eines Nutzens 11 und der Inlay-Streifen 6 wird unbestückt in Transportrichtung an der ersten Kaschierstation 14 vorbeigeführt. Eine zweite Kaschierstation 17 bildet eine Einrichtung zur Aufbringung eines Nutzes eines Ersatzbandes 18, welches aus laminierfähigem Material und als Rollenware bereitgestellt wird. Hierbei ist das Ersatzband 18 auf eine Rolle 19 aufgewickelt. Ein nicht dargestelltes Nutzen (Ersatznutzen) des Ersatzbandes 18 wird auf einen Nutzen 8 des Inlay-Streifens 6 aufgebracht, falls eine Funktionsfähigkeit von elektrischen und elektronischen Elementen des Nutzens 8 nicht gegeben ist.

Weiter dargestellt sind eine dritte Kaschierstation 20 und eine vierte Kaschierstation 21. Hierbei ist die dritte Kaschierstation 20 eine Einrichtung zur Aufbringung eines nicht dargestellten Nutzens eines weiteren, insbesondere als Laminationsfolie ausgebildeten, Laminationsbandes 22, wobei ein einzelner Nutzen des weiteren Laminationsbandes 22 einen laminierfähigen Hologrammlagenverbund 27 (siehe Fig. 2) bildet. Dieser laminierfähige Hologrammlagenverbund 27 stellt die weitere individualisierte Laminationslage 3 dar und enthält eine Photopolymerschicht 28, welche wiederum ein personalisiertes oder nicht personalisiertes Hologramm enthalten kann. Ein Nutzen des weiteren Laminationsbandes 22 wird ebenfalls nur dann auf einen Nutzen 8 eines Inlay-Streifens 6 bzw. auf einen Nutzen 11, der von der ersten Kaschierstation 14 aufgebracht wurde, aufgebracht, falls die Funktionsfähigkeit des entsprechenden Nutzens 8 gegeben ist. Andernfalls wird ein nicht dargestellter Nutzen eines weiteren Ersatzbandes 23 von der vierten Kaschierstation auf den defekten Nutzen 8 eines Inlay-Streifens 6 bzw. einen von der zweiten Kaschierstation 17 aufgebrachten Ersatznutzen aufgebracht. Das weitere Laminationsband 22 und das weitere Ersatzband 23 sind hierbei auf Rollen 24, 25 aufgewickelt.

Selbstverständlich kann eine Reihenfolge der Aufbringung von Nutzen 11 der Laminationsfolie 10 und Nutzen des weiteren Laminationsbands 22 auch vertauscht werden.

Zusätzlich, insbesondere wenn die Funktionsfähigkeit des Nutzens 8 gegeben ist, kann eine Qualität, z.B. eine Druckqualität, des Nutzens 11 geprüft werden. Hierzu kann z.B. mindestens ein Qualitätskriterium ausgewertet werden. Ist zumindest ein Qualitätskriterium des Nutzens 11 nicht erfüllt, so kann der Nutzen 11 verworfen, beispielsweise ausgespendet, werden. In diesem Fall kann auch der korrespondierende Nutzen des weiteren Laminationsbandes 22 verworfen, beispielsweise ausgespendet, werden. Korrespondierend bedeutet hierbei, dass der Nutzen 11 und der Nutzen des weiteren Laminationsbandes 22 demselben Sicherheitsprodukt 1 zugeordnet sind. Weiter kann dann ein entlang der Laminationsfolie 10 nachfolgendes Nutzen 11 der Laminationsfolie 10 und das zu dem nachfolgenden Nutzen 11 korrespondierende Nutzen des weiteren Laminationsbandes 22, welche jeweils das ihnen zugeordnete mindestens eine Qualitätskriterium erfüllen, auf den Nutzen 8 des Inlay-Streifens 6 aufgebracht werden. Hierzu kann z.B. eine Zuführgeschwindigkeit der Laminationsfolie 10 und des weiteren Laminationsbandes 22 erhöht werden.

Ist das zumindest eine Qualitätskriterium des Nutzens 11 erfüllt, so kann zeitlich vor oder zeitlich nach der Aufbringung des Nutzens 11 eine Qualität, z.B. eine Druckqualität, des korrespondierenden Nutzens des weiteren Laminationsbandes 22 geprüft werden.

Erfolgt das Prüfen des mindestens einen Qualitätskriterium zeitlich vor der Aufbringung des Nutzens 11 und ist das zumindest eine Qualitätskriterium des Nutzens des weiteren Laminationsbandes 22 nicht erfüllt, so kann sowohl der Nutzen 11 als auch der korrespondierende Nutzen des weiteren Laminationsbandes 22 verworfen, beispielsweise ausgespendet werden. In diesem Fall kann dann ein entlang des weiteren Laminationsbandes 22 nachfolgendes Nutzen des weiteren Laminationsbandes 22 und das zu dem nachfolgenden Nutzen des weiteren Laminationsbands 22 korrespondierende Nutzen 11 der Laminationsfolie 10, welche jeweils das ihnen zugeordnete mindestens eine Qualitätskriterium erfüllen, auf den Nutzen 8 des Inlay-Streifens 6 aufgebracht werden.

Erfolgt das Prüfen des mindestens einen Qualitätskriterium zeitlich nach der Aufbringung des Nutzens 11 und ist das zumindest eine Qualitätskriterium des Nutzens des weiteren Laminationsbandes 22 nicht erfüllt, so kann der Nutzen des weiteren Laminationsbandes 22 verworfen, beispielsweise ausgespendet, werden. In diesem Fall kann dann ein Nutzen des weiteren Ersatzbandes 23 aufgebracht werden.

Weiter dargestellt ist eine Steuereinrichtung 26, die datentechnisch mit der Einrichtung 15 zur Prüfung und den Kaschierstationen 14, 17, 20, 21 verbunden ist. Mittels der Steuereinrichtung 26 ist die Aufbringung der Nutzen 11 bzw. der Ersatznutzen derart steuerbar, dass die individualisierten Laminationslagen 3, 5 ausschließlich dann auf eine Inlay-Lage 4 aufbringbar ist, falls die Funktionsfähigkeit der Inlay-Lage 4 gegeben ist.

Die in den Ersatzbändern 18, 23 enthaltenen Ersatznutzen können die gleiche geometrische Dimension aufweisen, wie die korrespondierenden Nutzen der Laminationsbänder 10, 22. Anstelle von einer Anzahl Ersatznutzen, die einer Anzahl von Nutzen von Laminationsbändern entspricht, kann auch ein einzelnes Ersatznutzen auf einen defekten Nutzen 8 eines Inlay-Streifens 6 aufgebracht werden, welches die Nutzen aller Laminationsbänder, in Fig. 5 also die Nutzen der Laminationsbänder 10, 22, ersetzt. Hierzu kann das Ersatznutzen geometrische Dimensionen aufweisen, die gleich Dimensionen des Verbundes der Nutzen aller Laminationsbänder 10, 22 sind. In Fig. 5 könnte ein solches Ersatznutzen eine Dicke oder Höhe aufweisen, die der Summe der Dicken oder Höhen eines Nutzens 11 der Laminationsfolie 10 und eines Nutzens des weiteren Laminationsbandes 22 entspricht. Somit kann anstelle von zwei Kaschierstationen 17, 21 nur eine Kaschierstation zur Aufbringung eines Ersatznutzens vorgesehen werden.

In Fig. 5 ist dargestellt, dass in Transportrichtung 31 hinter der Kaschierstation 21 ein Deckfolienband 37 von einer Rolle 38 auf den vorliegenden Lagenverbund aufgebracht wird. Hiernach kann der Lagenverbund mittels einer Laminationsvorrichtung 39 unter einem vorbestimmten Druck und einer vorbestimmten Temperatur laminiert werden. Nach der Lamination können einzelne Sicherheitsprodukte 1 mittels einer Vereinzelungsvorrichtung 40 vereinzelt werden.

In Fig. 6 ist ein schematisches Flussdiagramm eines erfindungsgemäßen Verfahrens zur Herstellung eines mehrlagigen Sicherheitsproduktes 1 (siehe Fig. 1) dargestellt. Hierbei werden in einem ersten Schritt S1 Auftragsdaten zur Herstellung des Sicherheitsproduktes 1 eingelesen, z.B. von der in Fig. 5 dargestellten Steuereinrichtung 26. Weiter werden in einem zweiten Schritt S2 Auftragsdaten AD1 zur Bereit- oder Herstellung einer ersten individualisierten Laminationslage 5 und Auftragsdaten AD2 zur Bereit- oder Herstellung einer weiteren individualisierten Laminationslage 3 erzeugt. Diese Auftragsdaten AD1, AD2 werden in einem dritten Schritt S3 gleichzeitig jeweils an eine Einrichtung zur Bereitstellung der ersten individualisierten Laminationslage 5, die z.B. eine Tintenstrahldruckeinrichtung umfasst, und an eine Einrichtung zur Bereitstellung der weiteren individualisierten Laminationslage 3, die z.B. einen Holoprinter umfasst, übertragen.

In einem Herstellschritt S4a wird die erste individualisierten Laminationslage 5 und in einem Herstellschritt S4b die weitere individualisierten Laminationslage 3 hergestellt. Die Herstellschritte S4a, S4b laufen hierbei zeitlich parallel ab. Selbstverständlich ist möglich, dass die Herstellschritte S4a, S4b mehrere Teilschritte umfassen. Z.B. kann der Herstellschritt S4b einen Teilschritt umfassen, in dem eine Belichtung eines Hologrammkörpers, beispielsweise einer noch unbelichteten und nicht laminierfähigen Photopolymerschicht, erfolgt. In mindestens einem weiteren Teilschritt kann dann die vorhergehend beschriebene Herstellung eines laminierfähigen Hologrammlagenverbundes 27 erfolgen.

Wird Ausschuss bei der Bereit- oder Herstellung der individualisierten Laminationslagen 3, 5 detektiert, so kann eine erneute parallele Herstellung der individualisierten Laminationslagen 3, 5 erfolgen. Ebenfalls kann eine erneute parallele Herstellung der individualisierten Laminationslagen 3, 5 erfolgen, wenn detektiert wird, dass die individualisierten Laminationslagen 3, 5 nicht übereinstimmen oder nicht zueinander korrespondieren. Somit kann eine erneute Bereit- oder Herstellung also auch bei Datenversatz zwischen den individualisierten Laminationslagen 3, 5 erfolgen. Beispielsweise kann ein entsprechender Auftrag als Wiederholauftrag an der Steuereinrichtung 26 oder an den Einrichtungen zur Bereitstellung eingestellt werden.

In einem Aufbringschritt S5a wird die erste individualisierte Laminationslage 5, z.B. wie in Fig. 5 dargestellt, auf den eine Inlay-Lage 4 enhaltenden Lagenverbund aufgebracht.

Dem Aufbringschritt S5a zeitlich nachfolgend wird in einem Aufbringschritt S5b die weitere individualisierten Laminationslage 3, z.B. wie in Fig. 5 dargestellt, auf die erste individualisierte Laminationslage 5 aufgebracht.

Hiernach erfolgt in einem einzigen Laminationsschritt S6 eine Lamination des somit entstandenen Lagenverbundes. In einem Stanzschritt S7 wird ein Endnutzen aus dem Laminat ausgestanzt.

## Patentansprüche

1. Verfahren zur Herstellung eines mehrlagigen Sicherheitsproduktes (1), umfassend die Verfahrensschritte
- Erzeugen von Auftragsdaten (AD1) zur Herstellung einer ersten individualisierten Laminationslage (5),
- Erzeugen von Auftragsdaten (AD2) zur Herstellung mindestens einer weiteren individualisierten Laminationslage (3),
- Bereitstellen der ersten individualisierten Laminationslage (5),
- Bereitstellen der mindestens einen weiteren individualisierten Laminationslage (3), wobei das Erzeugen der Auftragsdaten (AD1, AD2) und/oder das Bereitstellen der ersten und der mindestens einen weiteren individualisierten Laminationslage (5, 3) zumindest teilweise zeitlich parallel erfolgt,
- Aufbringen der ersten individualisierten Laminationslage (5) auf einen Trägerkörper,
- Aufbringen der mindestens einen weiteren individualisierten Laminationslage (3) auf den Trägerkörper,
- Lamination des aus mindestens dem Trägerkörper, der ersten individualisierten Laminationslage (5) und der weiteren individualisierten Laminationslage (3) bestehenden Lagenverbundes.

2. Verfahren nach Anspruch 1, **dadurch gekennzeichnet, dass** zumindest eine der individualisierten Laminationslagen (3, 5) als laminierfähiger Hologrammlagenverbund (27) ausgebildet ist.

3. Verfahren nach Anspruch 2, **dadurch gekennzeichnet, dass** die als laminierfähiger Hologrammlagenverbund (27) ausgebildete Laminationslage (3) eine Deckschicht des mehrlagigen Sicherheitsproduktes (1) bildet.

4. Verfahren nach Anspruch 2, **dadurch gekennzeichnet, dass** die als laminierfähiger Hologrammlagenverbund (27) ausgebildete Laminationslage (3) eine Innenschicht des mehrlagigen Sicherheitsproduktes (1) bildet.

5. Verfahren nach einem der Ansprüche 2 bis 4, **dadurch gekennzeichnet, dass** die verbleibende individualisierte Laminationslage (5) als bedruckte Laminationslage ausgebildet ist.

6. Verfahren nach einem der vorangegangenen Ansprüche, **dadurch gekennzeichnet, dass** zusätzlich folgende Verfahrensschritte durchgeführt werden:
- Bereitstellen einer Inlay-Lage (4) oder eines die Inlay-Lage (4) beinhaltenden Lagenverbundes,
- Überprüfen einer Funktionsfähigkeit der Inlay-Lage (4),
- Aufbringen der individualisierten Laminationslagen (5, 3) auf die Inlay-Lage (4) oder den die Inlay-Lage (4) beinhaltenden Lagenverbund ausschließlich dann, falls die Funktionsfähigkeit gegeben ist.

7. Verfahren nach Anspruch 6, **dadurch gekennzeichnet, dass** mindestens eine Ersatzlage auf die Inlay-Lage (4) oder den die Inlay-Lage (4) beinhaltenden Lagenverbund aufgebracht werden, falls die Funktionsfähigkeit nicht gegeben ist.

8. Verfahren nach einem der vorangegangenen Ansprüche, **dadurch gekennzeichnet, dass** mindestens ein Qualitätskriterium der ersten individualisierten Laminationslage (5) ausgewertet wird, wobei die erste individualisierte Laminationslage (5) verworfen wird, falls das mindestens eine Qualitätskriterium nicht erfüllt ist, und/oder dass mindestens ein Qualitätskriterium der weiteren individualisierten Laminationslage (3) ausgewertet wird, wobei die weitere individualisierte Laminationslage (3) verworfen wird, falls das mindestens eine Qualitätskriterium nicht erfüllt ist.

9. Verfahren nach einem der vorangegangenen Ansprüche, **dadurch gekennzeichnet, dass** nach der Lamination ein Endnutzen mit einem Endformat aus dem Laminat ausgestanzt wird.

10. Verfahren nach einem der Ansprüche 1 bis 9, **dadurch gekennzeichnet, dass** eine Übereinstimmung der individualisierten Laminationslagen (3, 5) überprüft wird.

11. Vorrichtung zur Herstellung eines mehrlagigen Sicherheitsproduktes (1), wobei die Vorrichtung mindestens eine Steuereinrichtung (26), eine erste Einrichtung zur Bereitstellung einer ersten individualisierten Laminationslage (5), eine weitere Einrichtung zur Bereitstellung einer weiteren individualisierten Laminationslage (3), eine erste Einrichtung zur Aufbringung der ersten individualisierten Laminationslage (5), eine weitere Einrichtung zur Aufbringung der weiteren individualisierten Laminationslage (3) und eine Laminiereinrichtung umfasst, wobei mittels der Steuereinrichtung (26) Auftragsdaten einlesbar und Auftragsdaten (AD1) zur Herstellung der ersten individualisierten Laminationslage (5) und Auftragsdaten (AD2) zur Herstellung der weiteren individualisierten Laminationslage (3) erzeugbar sind, wobei die Auftragsdaten (AD1) zur Herstellung der ersten individualisierten Laminationslage (5) an die erste Einrichtung zur Bereitstellung und die Auftragsdaten (AD2) zur Herstellung der mindestens einen weiteren individualisierten Laminationslage (3) an die weitere Einrichtung zur Bereitstellung übertragbar sind, wobei mittels der ersten Einrichtung zur Bereitstellung die erste individualisierte Laminationslage (5) und mittels der weiteren Einrichtung zur Bereitstellung die weitere individualisierte Laminationslage (3) bereitstellbar ist, wobei mittels der ersten Einrichtung zur Aufbringung die erste individualisierte Laminationslage (5) und mittels der weiteren Einrichtung zur Aufbringung die weitere individualisierte Laminationslage (3) auf einen Trägerkörper aufbringbar ist, wobei mittels der Laminiereinrichtung der aus mindestens dem Trägerkörper, der ersten individualisierten Laminationslage (5) und der weiteren individualisierten Laminationslage (3) bestehende Lagenverbund laminierbar ist,
**dadurch gekennzeichnet, dass**
eine Übertragung der Auftragsdaten (AD1) an die erste Einrichtung zur Bereitstellung sowie der Auftragsdaten (AD2) an die weitere Einrichtung zur Bereitstellung und/oder das Bereitstellen der ersten und der mindestens einen weiteren individualisierten Laminationslage (5, 3) zumindest teilweise zeitlich parallel durchführbar ist.

## Claims

1. Method for manufacturing a multi-layer safety product (1), comprising the method steps of:
- producing order data (AD1) for the manufacture of a first individualised lamination layer (5),
- producing order data (AD3) for the manufacture of at least one further individualised lamination layer (3),
- preparing the first individualised lamination layer (5),
- preparing the at least one further individualised lamination layer (3), wherein the production of the order data (AD1, AD2) and/or the preparation of the first and the at least one further individualised lamination layer (5, 3) take place at least partially parallel in time,
- applying the first individualised lamination layer (5) onto a carrier body,
- applying the least one further individualised lamination layer (3) onto the carrier body,
- laminating the layer composite consisting of at least the carrier body, the first individualised lamination layer (5), and the further individualised lamination layer (3).

2. Method according to claim 1, **characterised in that** at least one of the individualised lamination layers (3, 5) is configured as a hologram layer composite (27) capable of being laminated.

3. Method according to claim 2, **characterised in that** the lamination layer (3), configured as a hologram layer composite (27) and capable of lamination, forms a cover layer of the multi-layer safety product (1).

4. Method according to claim 2, **characterised in that** the lamination layer (3), configured as a hologram layer composite (27) and capable of lamination, forms an inner layer of the multi-layer safety product (1).

5. Method according to any one of claims 2 to 4, **characterised in that** the remaining individualised lamination layer (5) is configured as a printed lamination layer.

6. Method according to any one of the preceding claims, **characterised in that** additional following method steps are carried out:
- preparing an inlay layer (4) or of a layer composite containing the inlay layer (4),
- checking the functional performance of the inlay layer (4),
- applying the individualised lamination layers (5, 3) onto the inlay layer (4) or the layer composite containing the inlay layer (4) exclusively if functional performance is provided.

7. Method according to claim 6, **characterised in that** at least one replacement layer is applied onto the inlay layer (4) or onto the layer composite containing the inlay layer (4) in the event of functional performance not being provided.

8. Method according to any one of the preceding claims, **characterised in that** at least one quality criterion of the first individualised lamination layer (5) is evaluated, wherein the first individualised lamination layer (5) is rejected in the event of the at least one quality criterion not being fulfilled, and/or that at least one quality criterion of the further individualised lamination layer (3) is evaluated, wherein the further individualised lamination layer (3) is rejected if the at least one quality criterion is not fulfilled.

9. Method according to any one of the preceding claims, **characterised in that**, after the lamination, an end-use version with an end format is punched out of the laminate.

10. Method according to any one of claims 1 to 9, **characterised in that** a concordance of the individualised lamination layers (3, 5) is checked.

11. Device for the manufacture of a multi-layer safety product (1), wherein the device comprises at least one control device (26), a first apparatus for preparation of a first individualised lamination layer (5), a further apparatus for preparation of a further individualised lamination layer (3), a first apparatus for application of the first individualised lamination layer (5), a further apparatus for application of the further individualised lamination layer (3), and a lamination apparatus, wherein, by means of the control device (26), order data can be read in, and order data (AD1) can be generated for the manufacture of the first individualised lamination layer (5) and order data (AD2) for the manufacture of the further individualised lamination layer (3), wherein the order data (AD1) for the manufacture of the first individualised lamination layer (5) can be transferred to the first apparatus for preparation, and the order data (AD2) for the manufacture of the at least one further individualised lamination layer (3) can be transferred to the further apparatus for preparation, wherein, by means of the first apparatus for preparation of the first individualised lamination layer (5), and by means of the further apparatus for preparation, the further individual lamination layer (3) can be prepared, wherein, by means of the first apparatus for application, the first individualised lamination layer (5) can be applied onto a carrier body, and, by means of the further apparatus for application, the further individualised lamination layer (3) can be applied onto a carrier body, wherein, by means of the lamination device, the lamination composite can be laminated, consisting of at least the carrier body, the first individualised lamination layer (5), and the further individualised lamination layer (3),
**characterised in that**
a transfer of the order data (AD1) to the first apparatus for preparation, and the order data (AD2) to the further apparatus for preparation, and/or the preparation of the first lamination layer and of the at least one further individualised lamination layer (5, 3) can be carried out at least partially parallel in time.

## Revendications

1. Procédé servant à fabriquer un produit de sécurité (1) à plusieurs strates, comprenant les étapes de procédé qui suivent consistant à :
- produire des données de commande (AD1) servant à fabriquer une première strate de stratification (5) individualisée ;
- produire des données de commande (AD2) servant à fabriquer au moins une autre strate de stratification (3) individualisée ;
- mettre à disposition la première strate de stratification (5) individualisée ;
- mettre à disposition l'au moins une autre strate de stratification (3) individualisée, dans lequel la production des données de commande (AD1, AD2) et/ou la mise à disposition de la première et de l'au moins une autre strate de stratification (5, 3) individualisée sont effectuées au moins en partie de manière parallèle dans le temps ;
- appliquer la première strate de stratification (5) individualisée sur un corps de support ;
- appliquer l'au moins une autre strate de stratification (3) individualisée sur le corps de support ;
- stratifier le composite de strates constitué au moins du corps de support, de la première strate de stratification (5) individualisée et de l'autre strate de stratification (3) individualisée.

2. Procédé selon la revendication 1, **caractérisé en ce qu'**au moins une des strates de stratification (3, 5) individualisées est réalisée sous la forme d'un composite de strates d'hologramme (27) pouvant être stratifié.

3. Procédé selon la revendication 2, **caractérisé en ce que** la strate de stratification (3) réalisée sous la forme d'un composite de strates d'hologramme (27) pouvant être stratifié forme une couche décorative du produit de sécurité (1) à plusieurs strates.

4. Procédé selon la revendication 2, **caractérisé en ce que** la strate de stratification (3) réalisée sous la forme d'un composite de strates d'hologramme (27) pouvant être stratifié forme une couche intérieure du produit de sécurité (1) à plusieurs strates.

5. Procédé selon l'une quelconque des revendications 2 à 4, **caractérisé en ce que** la strate de stratification (5) individualisée restante est réalisée sous la forme d'une strate de stratification imprimée.

6. Procédé selon l'une quelconque des revendications précédentes, **caractérisé en ce que** sont mises en oeuvre en supplément des étapes de procédé qui suivent consistant à :
- mettre à disposition une strate d'incrustation (4) ou un composite de strates comportant la strate d'incrustation (4) ;
- vérifier une capacité fonctionnelle de la strate d'incrustation (4) ;
- appliquer les strates de stratification (5, 3) individualisées sur la strate d'incrustation (4) ou sur le composite de strates comportant la strate d'incrustation (4) exclusivement si la capacité fonctionnelle est de mise.

7. Procédé selon la revendication 6, **caractérisé en ce qu'**au moins une strate de remplacement est appliquée sur la strate d'incrustation (4) ou sur le composite de strates comportant la strate d'incrustation (4) si la capacité fonctionnelle n'est pas de mise.

8. Procédé selon l'une quelconque des revendications précédentes, **caractérisé en ce qu'**au moins un critère de qualité de la première strate de stratification (5) individualisée est analysé, dans lequel la première strate de stratification (5) individualisée est rejetée dans le cas où l'au moins un critère de qualité n'est pas rempli, et/ou **en ce qu'**au moins un critère de qualité de l'autre strate de stratification (3) individualisée n'est pas analysé, dans lequel l'autre strate de stratification (3) individualisée est rejetée dans le cas où l'au moins un critère de qualité n'est pas rempli.

9. Procédé selon l'une quelconque des revendications précédentes, **caractérisé en ce qu'**un produit d'usage final présentant un format final est découpé par estampage du stratifié après la stratification.

10. Procédé selon l'une quelconque des revendications 1 à 9, **caractérisé en ce qu'**une concordance entre les strates de stratification (3, 5) individualisées est vérifiée.

11. Dispositif servant à fabriquer un produit de sécurité (1) à plusieurs strates, dans lequel le dispositif comprend au moins un système de commande (26), un premier système servant à mettre à disposition une première strate de stratification (5) individualisée, un autre système servant à mettre à disposition une autre strate de stratification (3) individualisée, un premier système servant à appliquer la première strate de stratification (5) individualisée, un autre système servant à appliquer l'autre strate de stratification (3) individualisée et un système de stratification, dans lequel des données de commande peuvent être lues au moyen du système de commande (26) et que des données de commande (AD1) servant à fabriquer la première strate de stratification (5) individualisée et des données de commande (AD2) servant à fabriquer l'autre strate de stratification (3) individualisée peuvent être produites, dans lequel les données de commande (AD1) servant à fabriquer la première strate de stratification (5) individualisée peuvent être transférées au premier système servant à la mise à disposition et les données de commande (AD2) servant à fabriquer l'au moins une autre strate de stratification (3) individualisée peuvent être transférées à l'autre système servant à la mise à disposition, dans lequel la première strate de stratification (5) individualisée peut être mise à disposition au moyen du premier système et que l'autre strate de stratification (3) individualisée peut être mise à disposition au moyen de l'autre système de mise à disposition, dans lequel la première strate de stratification (5) individualisée peut être appliquée au moyen du premier système d'application et que l'autre strate de stratification (3) individualisée peut être appliquée au moyen de l'autre système d'application sur un corps de support, dans lequel le composite de strates constitué d'au moins le corps de support, de la première strate de stratification (5) individualisée et de l'autre strate de stratification (3) individualisée peut être stratifié au moyen du système de stratification,
**caractérisé en ce**
**qu'**un transfert des données de commande (AD1) au premier système de mise à disposition ainsi que des données de commande (AD2) à l'autre système de mise à disposition et/ou la mise à disposition de la première et de l'au moins une autre strate de stratification (5, 3) individualisée peuvent être mis en oeuvre au moins en partie de manière parallèle dans le temps.
